# EUROPEAN PATENT APPLICATION

(11) **EP 4 579 330 A1**
(43) Date of publication of application: **02.07.2025**
(21) Application number: 24756076.6
(22) Date of filing: 04.02.2024
(51) Int. Cl.: G03B 9/06

(54) **IRIS DIAPHRAGM, CAMERA MODULE, AND ELECTRONIC DEVICE**

(30) Priority: 15.02.2023 CN 202310140841
(71) Applicant: Huawei Technologies Co., Ltd., Shenzhen, Guangdong 518129 (CN)
(72) Inventor: LI, Zhangcheng, Shenzhen, Guangdong 518129 (CN); LI, Sikun, Shenzhen, Guangdong 518129 (CN); FENG, Minyang, Shenzhen, Guangdong 518129 (CN)
(74) Representative: Grünecker Patent- und Rechtsanwälte PartG mbB
(86) International application number: PCT/CN2024/075831
(87) International publication number: WO 2024/169702

(57) **Abstract**

A variable aperture, a camera module, and an electronic device are provided. The variable aperture (100) includes a fastening base (10), a rotating bracket (20), a coil (32), a magnetic piece (31), a drive chip (40), a first electrical connector (51), a second electrical connector (52), and a plurality of blades (62). The rotating bracket (20) is rotatably connected to the fastening base (10). Apart of the blades (62) are connected to the fastening base (10), and a part of the blades (62) are connected to the rotating bracket (20). The plurality of blades (62) jointly enclose an aperture hole (101). The coil (32) is disposed on the rotating bracket (20), and the magnetic piece (31) is disposed on the fastening base (10). The coil (32) is configured to drive the rotating bracket (20) to rotate relative to the fastening base (10), to change a hole diameter of the aperture hole (101). Both the drive chip (40) and the first electrical connector (51) are disposed on the fastening base (10), the second electrical connector (52) is disposed on the rotating bracket (20), and the coil (32) is electrically connected to a power supply interface (433) of the drive chip (40) through the second electrical connector (52) and the first electrical connector (51). A circuit for connecting a data interface (432) of the drive chip (40) from the rotating bracket (20) to the fastening base (10) is not needed, so that an electrical connection structure is simplified. When the rotating bracket rotates, resistance is small, and power consumption of the variable aperture is low.

## Description

This application claims priority to Chinese Patent Application No. 202310140841.1, filed with the China National Intellectual Property Administration on February 15, 2023 and entitled "VARIABLE APERTURE, CAMERA MODULE, AND ELECTRONIC DEVICE", which is incorporated herein by reference in its entirety.

### TECHNICAL FIELD

This application relates to the field of image shooting technologies, and in particular, to a variable aperture, a camera module, and an electronic device.

### BACKGROUND

In recent years, major manufacturers impose stricter requirements on imaging quality of camera modules. A size of an aperture hole of a variable aperture is changed to adjust a luminous flux entering the variable aperture, to improve imaging quality of a camera module. In a conventional variable aperture, a drive chip and a coil are disposed on a rotating bracket, the drive chip outputs a working current to the coil, and after being powered on, the coil cooperates with a magnetic piece on a fastening base, to drive the rotating bracket to rotate relative to the fastening base. An electrical connection structure needs to be disposed on the variable aperture for an electronic device to supply power and send a drive signal to the drive chip on the rotating bracket. The electrical connection structure is complex and high in assembling difficulty. In addition, in a process in which the rotating bracket rotates relative to the fastening base, the coil needs a large current to drive the rotating bracket to rotate due to large resistance on the rotating bracket. Consequently, power consumption of the variable aperture is high.

### SUMMARY

This application provides a variable aperture with a simple electrical connection structure and low power consumption, a camera module, and an electronic device.

According to a first aspect, an embodiment of this application provides a variable aperture. The variable aperture includes a fastening base, a rotating bracket, a coil, a magnetic piece, a drive chip, a first electrical connector, a second electrical connector, and a plurality of blades. The rotating bracket is rotatably connected to the fastening base, a part of the blades are connected to the fastening base, a part of the blades are connected to the rotating bracket, and the plurality of blades jointly enclose an aperture hole. The coil is disposed on the rotating bracket, the magnetic piece is disposed on the fastening base, the coil is disposed facing the magnetic piece, and the coil is configured to drive the rotating bracket to rotate relative to the fastening base, to change a hole diameter of the aperture hole. Both the drive chip and the first electrical connector are disposed on the fastening base, the second electrical connector is disposed on the rotating bracket, the first electrical connector is electrically connected to the second electrical connector, and the coil is electrically connected to a power supply interface of the drive chip through the second electrical connector and the first electrical connector.

It may be understood that, compared with a solution in which dynamic magnetic driving is used, that is, the coil is disposed on the fastening base, the magnetic piece is disposed on the rotating bracket, and the magnetic piece drives the rotating bracket to rotate, in this application, a moving coil driving manner is used, that is, the magnetic piece is disposed on the fastening base, the coil is disposed on the rotating bracket, and the coil drives the rotating bracket to rotate. This can avoid affecting aperture adjustment of the variable aperture as the magnetic piece is affected by a magnet in another component near the variable aperture, for example, a magnet in a motor.

It may be understood that, compared with the solution in which the drive chip is fastened to the rotating bracket, in this application, the drive chip is fastened to the fastening base when the variable aperture adopts a moving coil driving manner, and the coil is electrically connected to the power supply interface of the drive chip through the second electrical connector and the first electrical connector, so that a circuit for connecting a data interface of the drive chip from the rotating bracket to the fastening base may be not needed, and a connection structure in an electrical connection assembly can be simplified. Resistance on the rotating bracket during rotation is small, which helps reduce power consumption of the variable aperture.

In a possible implementation, the variable aperture includes a first spring plate, and an output end of the second electrical connector is electrically connected to an input end of the first electrical connector through the first spring plate.

It may be understood that, compared with a solution in which the first electrical connector and the second electrical connector are electrically connected through the flexible circuit board, in this application, assembling among the spring plate, the fastening base, and the rotating bracket is simpler, assembling difficulty is reduced, and electrical connection reliability of the variable aperture is better.

In a possible implementation, the variable aperture further includes a second spring plate. An input end of the second electrical connector may be electrically connected to an output end of the first electrical connector through the second spring plate.

In a possible implementation, one part of the first spring plate is fastened to the fastening base, and the other part of the first spring plate is fastened to the rotating bracket.

It may be understood that the variable aperture 100 may include an initial state, an intermediate state, and an end state. The intermediate state is any state between the initial state and the end state. When the variable aperture is in the initial state, the aperture hole of the variable aperture is the smallest, and a luminous flux entering a lens assembly is the smallest. When the variable aperture is in the end state, the aperture hole of the variable aperture is the largest.

In a process in which the rotating bracket returns from the intermediate state to the initial state after rotation, the first spring plate may provide an elastic force while restoring deformation, to help the rotating bracket return and increase a return speed of the rotating bracket.

In a possible implementation, the first spring plate includes a first end, a deformation section, and a second end, the deformation section is connected between the first end and the second end, the first end is fastened to the fastening base, and the second end is fastened to the rotating bracket.

The deformation section is in a continuous "S" type.

It may be understood that, a length and an arc of the first spring plate in the "S" type may be increased as much as possible in limited space, to reduce a value of a stiffness coefficient k of the spring plate, and improve reliability of the first spring plate.

In a possible implementation, the first end is provided with a first fastening hole, the second end is provided with a second fastening hole, the fastening base is provided with a first connection post, and the rotating bracket is provided with a second connection post. The first fastening hole is sleeved on the first connection post, and the second fastening hole is sleeved on the second connection post. In this way, reliability of connection between the first spring plate and each of the rotating bracket and the fastening base is good, and a risk of disconnection between the first electrical connector and the second electrical connector in a rotation process of the rotating bracket is reduced.

In a possible implementation, a stiffness coefficient of the first spring plate is less than or equal to 1.6 mN/mm.

It may be understood that, it may be understood that, if the stiffness coefficient of the spring plate is larger, the rotating bracket needs to overcome larger resistance caused by spring deformation during rotation, and an action force between the coil and the magnetic piece also needs to be larger. In other words, when the rotating bracket is at a same rotation angle, a larger stiffness coefficient of the spring plate indicates a larger current that needs to be output to the coil, and higher power consumption of the variable aperture. Therefore, the value of the stiffness coefficient k is set to be within a range less than or equal to 1.6 millinewtons/mm mN/mm, which helps reduce a force generated by spring plate deformation of the rotating bracket in a rotation process, and may reduce energy consumption of the variable aperture.

In a possible implementation, the second electrical connector is electrically connected to the first electrical connector through a flexible circuit board.

It may be understood that, compared with a solution in which the drive chip is fastened to the rotating bracket and then electrically connected to an external circuit of the variable aperture through the flexible circuit board, in a case in which the drive chip is fastened to the fastening base, a quantity of traces in the flexible circuit board can be reduced, and complexity of circuit connection in the flexible circuit board can be reduced. A smaller quantity of traces in the flexible circuit board indicates higher softness of the flexible circuit board, and smaller resistance on the rotating bracket in the rotation process. When the rotating bracket rotates at a same rotation angle, the coil requires a smaller working current, and the power consumption of the variable aperture is lower.

In a possible implementation, the fastening base includes a bottom wall, a side wall, and a protruding part, the side wall and the protruding part are spaced from each other and are disposed on the bottom wall, the bottom wall, the side wall, and the protruding part are annular, and the side wall surrounds the protruding part. The bottom wall, the side wall, and the protruding part enclose a rotating channel, the rotating bracket rotates in the rotating channel, and the flexible circuit board is partially located in the rotating channel and surrounds at least a part of the protruding part.

It may be understood that, the flexible circuit board may greatly reduce a reaction force of the rotating bracket of the variable aperture in the rotation process, thereby further reducing power consumption. In addition, the flexible circuit board has specific flexibility, and a good anti-impact capability, so that reliability of an electrical connection between the first electrical connector and the second electrical connector is good.

In a possible implementation, the first electrical connector is a metal terminal, and the first electrical connector is embedded into the fastening base.

It may be understood that the first electrical connector is embedded into the fastening base, so that a quantity of assembled parts of the variable aperture can be reduced, assembling steps can be reduced, and an assembling difficulty can be reduced. In addition, the fastening base may further protect the first electrical connector, to reduce a risk of damage to the first electrical connector, so that reliability of an electrical connection structure of the variable aperture is good.

In a possible implementation, the first electrical connector is a flexible circuit board, the first electrical connector includes a body part, a first connection end, and a second connection end, the first connection end and the second connection end are spaced from each other, are connected to the body part, and are electrically connected to the body part, and the body part is connected to a side that is of the fastening base and that is away from the rotating bracket. The drive chip is connected to the body part, the coil is electrically connected to the power supply interface of the drive chip through the second electrical connector, the first connection end, and the body part, and the drive chip is electrically connected to an external circuit of the variable aperture through the body part and the second connection end.

It may be understood that, the flexible circuit board has flexibility, and a good anti-impact capability, so that reliability of an electrical connection between the first electrical connector and the second electrical connector is good.

In a possible implementation, the first connection end and the body part are arranged in a thickness direction of the variable aperture, and the first connection end is located on a side that is of the body part and that is close to the rotating bracket.

It may be understood that the first connection end is located on a side that is of the body part and that is close to the rotating bracket. When the coil is electrically connected to the first connection end of the first electrical connector through the second electrical connector, a distance between the first connection end and the rotating bracket is short, which helps implement an electrical connection between the first connection end and the second electrical connector.

In a possible implementation, the coil is disposed facing the magnetic piece, and the coil and the magnetic piece are arranged in the thickness direction of the variable aperture.

It may be understood that the coil and the magnetic piece are arranged in the thickness direction of the variable aperture, so that a thickness of the variable aperture can be reduced, and a volume of the variable aperture can be reduced.

In a possible implementation, the magnetic piece includes a south pole and a north pole, and there is an included angle between a direction of the south pole and a direction of the north pole.

It may be understood that the south pole and the north pole of the magnetic piece are disposed at an included angle, and a direction of an ampere force applied to the coil may be tangent to an axial direction of the rotating bracket, and is parallel to a plane on which the rotating bracket is located. Most of the ampere force can be used to drive the rotating bracket to rotate. A utilization rate of the ampere force applied to the coil is high. This can reduce unnecessary energy loss in the rotation process of the variable aperture, and reduce power consumption of the variable aperture.

In a possible implementation, the variable aperture further includes a magnetic conductive piece, and the magnetic conductive piece is located on a side that is of the magnetic piece and that is away from the coil.

It may be understood that the magnetic conductive piece may enhance a magnetic field of the magnetic piece at the coil. In this case, magnetic field leakage of the magnetic piece is reduced, and magnetic interference caused by the magnet in the motor to the magnetic piece of the variable aperture is reduced. In a solution in which a magnetic conductive piece is disposed, a driving force of the coil is greater when a current of a same amplitude is supplied to the coil. In other words, when the rotating bracket rotates at a same angle, a coil provided with a magnetic conductive sheet requires a smaller working current, and power consumption of the variable aperture is lower.

In a possible implementation, the magnetic piece includes a bottom surface and an outer side surface, the bottom surface is a side surface that is of the magnetic piece and that is away from the coil, and the outer side surface is a side surface that is of the magnetic piece and that is away from the center of the fastening base. The magnetic conductive piece is connected to the outer side surface and the bottom surface of the magnetic piece.

It may be understood that the magnetic conductive piece is connected to the outer side surface and the bottom surface of the magnetic piece, and the magnetic conductive piece may be of an "L" type. Magnetic leakage of the magnetic piece along the outer side surface and bottom surface can be reduced, and a magnetic field at the coil can be further enhanced.

In a possible implementation, the coil includes a first sub-coil and a second sub-coil that are spaced from each other, the magnetic piece includes a first magnetic sub-piece and a second magnetic sub-piece that are spaced from each other, the first sub-coil is disposed facing the first magnetic sub-piece, and the second sub-coil is disposed facing the second magnetic sub-piece.

The first sub-coil and the second sub-coil are configured to jointly drive the rotating bracket to rotate relative to the fastening base, and the first sub-coil and the second sub-coil are symmetrical with respect to a rotation center of the rotating bracket.

It may be understood that, in a process in which the first sub-coil and the second sub-coil jointly drive the rotating bracket to rotate, action forces of the first sub-coil and the second sub-coil on positions of the rotating bracket are balanced. The rotating bracket is unlikely to tilt due to an unbalanced force.

In a possible implementation, the variable aperture further includes a Hall magnetic piece, the Hall magnetic piece is connected to the rotating bracket, the Hall magnetic piece is disposed facing the drive chip, and the drive chip is further configured to detect magentic field strength of the Hall magnetic piece at different positions.

It may be understood that, the drive chip may determine a position of the Hall magnetic piece based on a current magentic field strength of the Hall magnetic piece, and may determine an angle at which the rotating bracket rotates relative to the fastening base, so as to accurately determine an aperture size of an aperture hole of the variable aperture, and accurately determine a luminous flux entering a lens assembly from the current position. In addition, when there is a difference between the current magentic field strength of the Hall magnetic piece and a target magentic field strength, the drive chip may adjust a magnitude of an output working current based on the difference between the current magentic field strength of the Hall magnetic piece and the target magentic field strength, so that an angle at which the coil drives the rotating bracket to rotate reaches a target angle, and a required target aperture size is obtained, thereby implementing closed-loop control.

In a possible implementation, the variable aperture further includes a magnetic suction sheet, the magnetic suction sheet is connected to the rotating bracket, and the magnetic suction sheet cooperates with the magnetic piece to drive the rotating bracket to rotate relative to the fastening base, to decrease a hole diameter of the aperture hole. In the thickness direction of the variable aperture, a projection of a magnetic field center of the magnetic suction sheet on the fastening base is staggered with a projection of a magnetic field center of the magnetic piece on the fastening base.

It may be understood that the magnetic suction sheet may help the rotating bracket quickly return to an initial position after the rotating bracket rotates relative to the fastening base.

According to a second aspect, an embodiment of this application provides a camera module. The camera module includes a lens assembly and a variable aperture. The variable aperture is fastened to the lens assembly, and is located on a light entry side of the lens assembly.

It may be understood that when the variable aperture is used in the camera module, power consumption of the variable aperture is low, and power consumption of the camera module is also low.

According to a third aspect, an embodiment of this application provides an electronic device. The electronic device includes a housing and a camera module, and the camera module is disposed on the housing.

It may be understood that when the camera module is used in the electronic device, power consumption of the electronic device is low, standby time of the electronic device is long, and a user feels food.

### BRIEF DESCRIPTION OF DRAWINGS

To describe the technical solutions in embodiments of this application, the following describes the accompanying drawings used in embodiments of this application.
FIG. 1 is a diagram of a structure of an implementation of an electronic device according to an embodiment of this application;
FIG. 2 is a partially sectional view of the electronic device shown in FIG. 1 at a line A-A according to an implementation;
FIG. 3 is a diagram of a partial structure of a camera module of the electronic device shown in FIG. 2;
FIG. 4 is a schematic exploded view of the camera module shown in FIG. 3 according to an implementation;
FIG. 5 is a schematic exploded view of a part of a variable aperture shown in FIG. 4 according to an implementation;
FIG. 6 is a diagram of a structure of a fastening base shown in FIG. 5 according to an implementation;
FIG. 7 is a diagram of structures of a magnetic piece and a magnetic conductive piece shown in FIG. 5 according to an implementation;
FIG. 8 is a diagram of assembling the magnetic piece and the magnetic conductive piece shown in FIG. 7 according to an implementation;
FIG. 9 is a diagram of assembling a magnetic piece, a magnetic conductive piece, and a fastening base shown in FIG. 5 according to an implementation;
FIG. 10 is a diagram of a structure of a first electrical connector shown in FIG. 5 according to an implementation;
FIG. 11 is a diagram of assembling a drive chip and a first electrical connector shown in FIG. 5 according to an implementation;
FIG. 12 is a diagram of a structure of the drive chip shown in FIG. 11 according to an implementation;
FIG. 13 is a diagram of assembling a drive chip, a first electrical connector, and a fastening base shown in FIG. 5 according to an implementation;
FIG. 14 is a diagram of structures of the drive chip, the first electrical connector, and the fastening base shown in FIG. 13 from another perspective;
FIG. 15 is a diagram of a structure of a rotating bracket shown in FIG. 5 according to an implementation;
FIG. 16 is a diagram of a structure of the rotating bracket shown in FIG. 15 from another perspective;
FIG. 17 is a diagram of assembling a rotating bracket and a magnetic suction sheet shown in FIG. 5 according to an implementation;
FIG. 18 is a diagram of assembling a coil and a second electrical connector shown in FIG. 5 according to an implementation;
FIG. 19 is a diagram of assembling a coil, a second electrical connector, and a rotating bracket shown in FIG. 5 according to an implementation;
FIG. 20 is a diagram of a partial structure of a variable aperture shown in FIG. 4 according to an implementation;
FIG. 21 is a diagram of a partial structure of the variable aperture shown in FIG. 20 from another perspective;
FIG. 22 is a cross-sectional diagram of a partial structure of the variable aperture shown in FIG. 21 at B-B according to an implementation;
FIG. 23 is a diagram of assembling a drive chip, an electrical connection assembly, a drive assembly, and a filter shown in FIG. 21 according to an implementation;
FIG. 24 is a diagram of an electrical connection among the drive chip, a coil, the electrical connection assembly, and a computing control unit of an electronic device shown in FIG. 23 according to an implementation;
FIG. 25 is a diagram of a structure of a first spring plate shown in FIG. 23 according to an implementation;
FIG. 26 is a diagram of assembling a magnetic piece and a magnetic suction sheet shown in FIG. 5 according to an implementation;
FIG. 27 is an enlarged view at C shown in FIG. 20 according to an implementation;
FIG. 28 is a diagram of a partial structure of the variable aperture shown in FIG. 21 from still another perspective;
FIG. 29 is an enlarged view at D shown in FIG. 28 according to an implementation;
FIG. 30 is a diagram of a partial structure of a variable aperture shown in FIG. 4 according to an implementation;
FIG. 31 is a diagram of a structure of a blade shown in FIG. 5 from different perspectives according to an implementation;
FIG. 32 is a diagram of a partial structure of a variable aperture shown in FIG. 4 according to an implementation;
FIG. 33 is a diagram of a partial structure of a variable aperture shown in FIG. 4 according to an implementation;
FIG. 34 is a diagram of a structure of a variable aperture shown in FIG. 4 according to another implementation;
FIG. 35 is a schematic exploded view of a part of the variable aperture shown in FIG. 34 according to an implementation;
FIG. 36 is a diagram of assembling a first electrical connector and a fastening base shown in FIG. 35 according to an implementation;
FIG. 37 is a sectional view of the fastening base shown in FIG. 36 according to an implementation;
FIG. 38 is a diagram of assembling a first electrical connector, a drive chip, and a filter shown in FIG. 35 according to an implementation;
FIG. 39 is a diagram of a structure of a variable aperture shown in FIG. 4 according to another implementation;
FIG. 40 is a schematic exploded view of a part of the variable aperture shown in FIG. 39 according to an implementation;
FIG. 41 is a diagram of assembling a third electrical connector and a fastening base shown in FIG. 40 according to an implementation; and
FIG. 42 is a diagram of assembling an electrical connection assembly, a coil, a drive chip, and a filter shown in FIG. 40 according to an implementation.

### DESCRIPTION OF EMBODIMENTS

The following describes embodiments of this application with reference to the accompanying drawings in embodiments of this application.

In descriptions of embodiments of this application, it should be noted that, unless otherwise clearly specified and limited, terms such as "mounting" and "connection" should be understood in a broad sense. For example, the "connection" may be a detachable connection, a non-detachable connection; and may be a direct connection, or may be an indirect connection through an intermediary. A "fixed connection" means that two parts are connected to each other and a relative position relationship remains unchanged after the two parts are connected. "Rotatable connection" means that two parts are connected to each other and can rotate relative to each other after the two parts are connected to each other. "Slidable connection" means that two parts are connected to each other and can slide relative to each other after the two parts are connected to each other. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

It may be understood that the specific embodiments described herein are merely used to explain a related invention, but are not intended to limit the present invention. In addition, it should be further noted that, for ease of description, only a part related to the present invention is shown in the accompanying drawings.

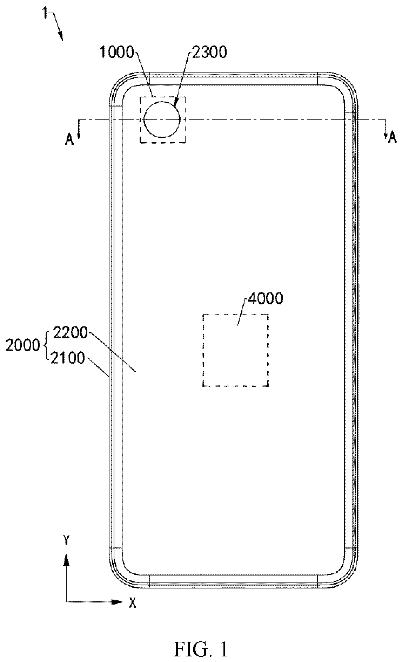

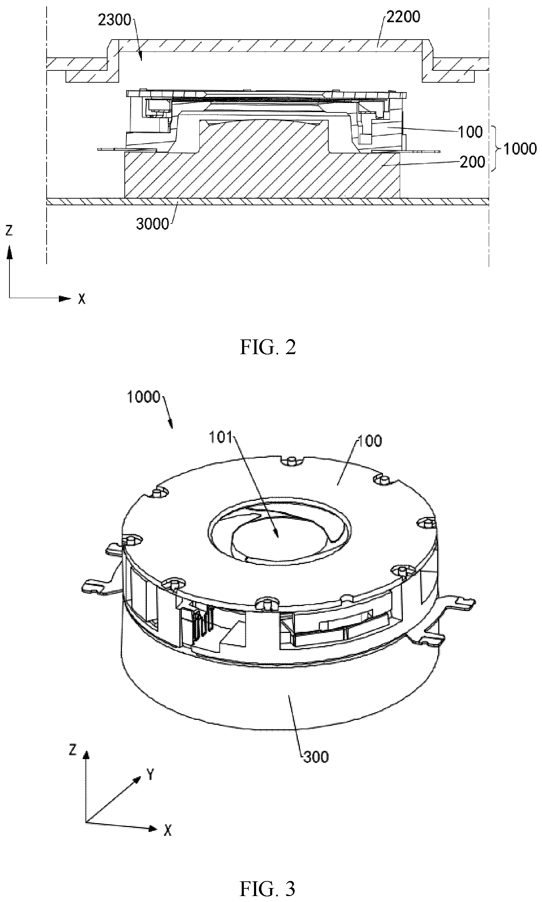

FIG. 1 is a diagram of a structure of an electronic device 1 according to an embodiment of this application. FIG. 2 is a partially sectional view of the electronic device 1 shown in FIG. 1 at a line A-A according to an implementation.

As shown in FIG. 1 and FIG. 2, the electronic device 1 may be a device having a camera module 1000, like a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, the electronic device 1 is described by using the mobile phone as an example.

As shown in FIG. 1 and FIG. 2, the electronic device 1 may include a camera module 1000, a housing 2000, a screen 3000, and a host circuit board 4000. It should be noted that FIG. 1, FIG. 2, and the following related accompanying drawings merely schematically show some components included in the electronic device 1. Actual shapes, actual sizes, actual positions, and actual structures of these components are not limited by FIG. 1, FIG. 2, and the following accompanying drawings. In addition, because the host circuit board 4000 and the camera module 1000 are internal structures of the electronic device 1, FIG. 1 schematically shows the host circuit board 4000 and the camera module 1000 by using dashed lines.

In some implementations, when the electronic device 1 is a device in another form, the electronic device 1 may not include the screen 3000 or the host circuit board 4000.

For ease of description, a width direction of the electronic device 1 is defined as an X axis. A length direction of the electronic device 1 is a Y axis. A thickness direction of the electronic device 1 is a Z axis. It may be understood that a coordinate system of the electronic device 1 may be flexibly set based on a specific actual requirement.

For example, the housing 2000 may include a host side frame 2100 and a rear cover 2200. The rear cover 2200 may be fastened to a side of the host side frame 2100. The screen 3000 may be fastened to a side that is of the host side frame 2100 and that is away from the rear cover 2200. The screen 3000, the host side frame 2100, and the rear cover 2200 may jointly enclose an interior of the electronic device 1. The interior of the electronic device 1 may be used for placing a component of the electronic device 1, for example, a battery, a receiver, or a microphone.

The screen 3000 may be configured to display an image and the like. The screen 3000 may be a flat screen or a curved screen. A display of the screen 3000 may be an organic light-emitting diode (organic light-emitting diode, OLED) display, an active-matrix organic light-emitting diode (active-matrix organic light-emitting diode, AMOLED) display, a liquid crystal display (liquid crystal display, LCD), or the like.

Refer to FIG. 1 and FIG. 2 again. The host circuit board 4000 may be fastened inside the electronic device 1. The host circuit board 4000 may be provided with a chip like a central processing unit (central processing unit, CPU), a graphics processing unit (graphics processing unit, GPU), or a universal memory (universal flash storage, UFS).

In addition, the camera module 1000 may be disposed inside the electronic device 1. The camera module 1000 may be configured to collect ambient light outside the electronic device 1. The camera module 1000 may be electrically connected to the host circuit board 4000. In this way, signals may be transmitted between the camera module 1000 and the host circuit board 4000. It may be understood that the camera module 1000 may be a rear-facing camera module, a front-facing camera module, or the like. In addition, the camera module 1000 may be a vertical camera module (for example, an optical axis direction of the camera module is a Z-axis direction), or may be a periscope camera module (for example, an optical axis direction of the camera module may be any direction on an X-Y plane).

In some implementations, the camera module 1000 may be located inside the electronic device 1. The camera module 1000 may be fastened to a side that is of the screen 3000 and that faces the rear cover 2200. For example, a light transmission hole 2300 may be provided on the rear cover 2200. A shape of the light transmission hole 2300 is not limited to the circle shown in FIG. 1. Through the light transmission hole 2300, the inside of the electronic device 1 may communicate with the outside of the electronic device 1. Light outside the electronic device 1 may enter the electronic device 1 through the light transmission hole 2300 on the rear cover 2200. The camera module 1000 may collect ambient light entering the electronic device 1.

FIG. 3 is a diagram of a partial structure of the camera module 1000 of the electronic device 1 shown in FIG. 2.

As shown in FIG. 2 and FIG. 3, the camera module 1000 may include a variable aperture 100 and a lens assembly 200. An optical axis of the camera module 1000 may include an optical axis of the variable aperture 100 and an optical axis of the lens assembly 200. In some implementations, both an optical axis direction of the lens assembly 200 and an optical axis direction of the variable aperture 100 may be a Z-axis direction.

The lens assembly 200 may be a fixed-focus lens, an auto focus (Auto Focus, AF) lens, a zoom lens, or the like. An AF lens assembly is used as an example of the lens assembly 200 in this application for description.

The lens assembly 200 may include a lens 300 and a motor (not shown in the figure). The lens 300 may be disposed on the motor. The motor may be configured to drive the lens 300 to move in the optical axis direction of the camera module 1000 (namely, the Z-axis direction). The motor may be a voice coil motor or a shape memory alloy (shape memory alloys, SMA) motor. A specific structure of the motor is not limited in this application.

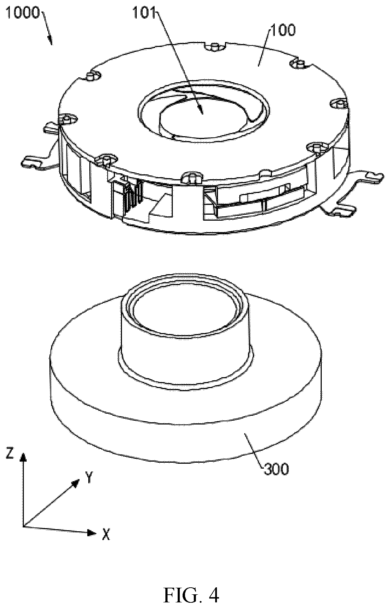

FIG. 4 is a schematic exploded view of the camera module 1000 shown in FIG. 3 according to an implementation.

As shown in FIG. 2, FIG. 3, and FIG. 4, the variable aperture 100 may be located on a light entry side of the lens 300 of the lens assembly 200, and is fastened to the lens assembly 200. The variable aperture 100 may have an aperture hole 101 of a variable size.

The variable aperture 100 may be disposed opposite to the light transmission hole 2300 on the rear cover 2200. The lens 300 may be disposed opposite to the aperture hole 101 of the variable aperture 100. In this way, light from an object may enter the lens 300 through the aperture hole 101. The variable aperture 100 may adjust a size of the aperture hole 101 to adjust an amount of light admitted by the lens 300.

For example, when the electronic device 1 performs image shooting in a condition of low light, the variable aperture 100 may increase the aperture hole 101, to increase a luminous flux entering the lens assembly 200. When the electronic device 1 performs image shooting in a condition of sufficient light, the variable aperture 100 may reduce the aperture hole 101, to reduce a luminous flux entering the lens assembly 200.

It may be understood that, when the size of the aperture hole 101 of the variable aperture 100 and a position of the aperture hole 101 of the variable aperture 100 relative to the lens 300 change, a value of an angle of view of the lens 300 also changes. In some implementations, the variable aperture 100 may be fastened to the lens 300, so that when the motor drives the lens 300 to move in the Z-axis direction, the variable aperture 100 can also move in the Z-axis direction. In other words, in a process in which the lens 300 moves in the Z-axis direction, the position of the variable aperture 100 relative to the lens 300 is fixed. In this way, in a case of not considering other factors affecting the angle of view of the lens 300, when the aperture hole 101 of the variable aperture 100 is fixed relative to the position of the lens 300, the angle of view of the lens 300 is also fixed.

In some implementations, a central axis of the aperture hole 101 may be collinear with an optical axis of the lens 300. It may be understood that the central axis of the aperture hole 101 of the variable aperture 100 may be a virtual axis that passes through the center of the aperture hole 101 and that is in a thickness direction of the variable aperture 100.

In some implementations, the thickness direction of the variable aperture 100 may be the Z-axis direction.

In some implementations, the variable aperture 100 may be fastened to the motor. In this way, when the motor drives the lens 300 to move in the Z-axis direction, the variable aperture 100 may not need to move in the Z-axis direction, and the lens 300 may approach or move away from the variable aperture 100.

In some implementations, when the lens assembly 200 is a fixed-focus lens, the motor of the lens assembly 200 may be not needed. In this case, the variable aperture 100 may be directly fastened to the light entry side of the lens 300.

In some implementations, the variable aperture 100 may include an initial state, an intermediate state, and an end state. The intermediate state is any state between the initial state and the end state. When the variable aperture 100 is in the initial state, the aperture hole 101 of the variable aperture 100 is the smallest, and a luminous flux entering the lens assembly 200 is the smallest. When the variable aperture 100 is in the end state, the aperture hole 101 of the variable aperture 100 is the largest, and a luminous flux entering the lens assembly 200 is the largest. The following provides descriptions by using a structure of the variable aperture 100 in the initial state as an example.

In some implementations, the electronic device 1 may include a computing control unit 5000. For example, the computing control unit 5000 may be disposed on the host circuit board 4000 (as shown in FIG. 1). The computing control unit 5000 may alternatively be disposed on another circuit board in the electronic device 1, for example, disposed on a circuit board on which a universal serial bus (universal serial bus, USB) component is located.

In some embodiments, the computing control unit 5000 may be an application processor (application processor, AP). The computing control unit 5000 may be electrically connected to the camera module 1000. The computing control unit 5000 may be configured to: receive and process an electrical signal that is from the camera module 1000 and that includes image information. The computing control unit 5000 may be further configured to control the variable aperture 100 or the motor of the camera module 1000 to move, to implement adjustment of an amount of light admitted by the camera module 1000, automatic focus (Automatic Focus, AF) motion, or the like.

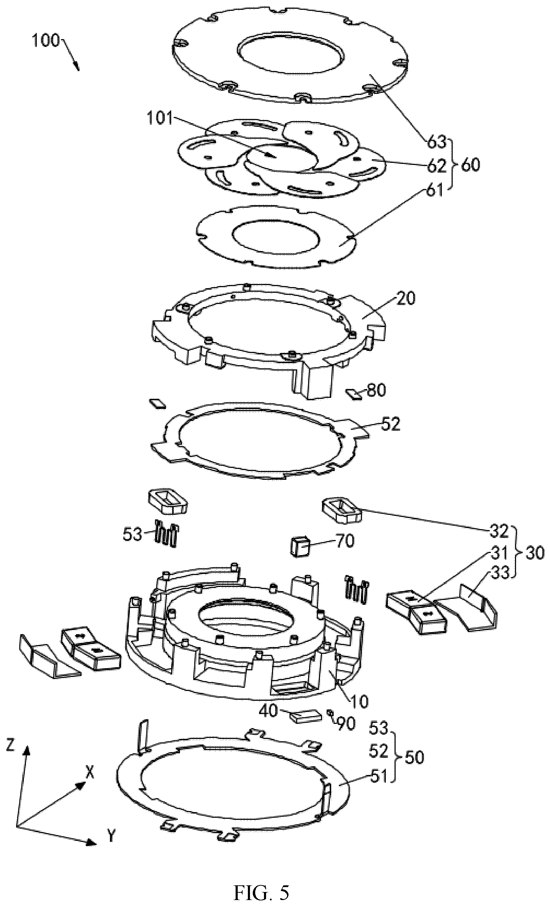

FIG. 5 is a schematic exploded view of a part of the variable aperture 100 shown in FIG. 4 according to an implementation.

As shown in FIG. 5, the variable aperture 100 may include a fastening base 10, a rotating bracket 20, a drive assembly 30, a drive chip 40, an electrical connection assembly 50, a blade assembly 60, a Hall magnetic piece 70, and a magnetic suction sheet 80.

For example, the drive assembly 30 may include a magnetic piece 31, a coil 32, and a magnetic conductive piece 33. The electrical connection assembly 50 may include a first electrical connector 51, a second electrical connector 52, and a third electrical connector 53. The blade assembly 60 may include a gasket 61, a plurality of blades 62, and an upper cover 63.

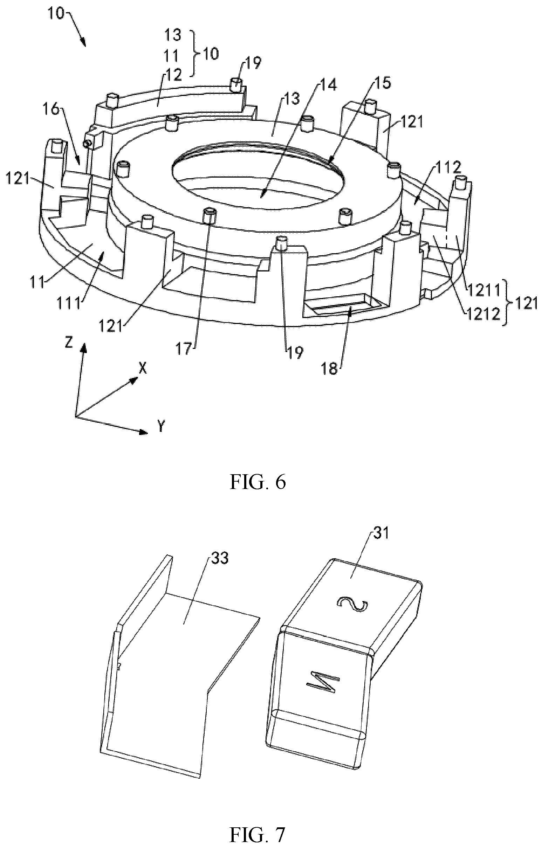

FIG. 6 is a diagram of a structure of the fastening base 10 shown in FIG. 5 according to an implementation.

As shown in FIG. 6, the fastening base 10 may include a bottom wall 11, a side wall 12, and a protruding part 13. The side wall 12 and the protruding part 13 may be fastened to a same side of the bottom wall 11. The protruding part 13 and the side wall 12 may be spaced from each other.

The fastening base 10 may have accommodating space 14. For example, the protruding part 13 may enclose the accommodating space 14. The accommodating space 14 may be used to accommodate a part of the lens 300. It may be understood that, when the lens 300 and the variable aperture 100 move relative to each other in the Z-axis direction, the accommodating space 14 may be used to provide space for accommodating the lens 300, that is, the lens 300 and the variable aperture 100 may partially overlap in the Z-axis direction. In this way, a length of the camera module 1000 in the Z-axis direction is not increased, and zooming of the lens 300 can be implemented, thereby helping improve utilization of internal space of the electronic device 1.

In some implementations, the fastening base 10 may be provided with a light transmission hole 15. External light may pass through the light transmission hole 15 of the fastening base 10. For example, the light transmission hole 15 of the fastening base 10 may be located on the protruding part 13.

In some implementations, the side wall 12, the protruding part 13, and the bottom wall 11 of the fastening base 10 may all be in a ring shape. The side wall 12 of the fastening base 10 may be disposed around the light transmission hole 15 of the fastening base 10. For example, the side wall 12 of the fastening base 10 may be disposed around the protruding part 13 of the bottom wall 11. The side wall 12, the protruding part 13, and the bottom wall 11 of the fastening base 10 may enclose a rotating channel 16.

As shown in FIG. 5 and FIG. 6, a first groove 111 and a second groove 112 that are spaced from each other may be provided on the bottom wall 11 of the fastening base 10. An opening of the first groove 111 and an opening of the second groove 112 may face the rotating bracket 20. The first groove 111 and the second groove 112 may be symmetric with respect to the center of the fastening base 10.

In some implementations, the side wall 12 may include a plurality of bearing posts 121. The plurality of bearing posts 121 may be spaced from each other around the light transmission hole 15 of the fastening base 10.

For example, the bearing post 121 may include a first part 1211 and a second part 1212, and the second part is connected to a side that is of the first part and that is close to the rotating channel 16. In the Z-axis direction, a height of the second part 1212 is lower than a height of the first part 1211. In this way, a stepped surface may be formed on a side that is of the bearing post 121 and that is close to the rotating channel 16.

In some implementations, there may be four bearing posts 121. Two of the four bearing posts 121 may form a group, and two bearing posts 121 in a same group may be symmetric with respect to the center of the fastening base 10.

In some implementations, the first groove 111 may be located between a first bearing post 1211 and a second bearing post 1212. The second groove 112 may be located between a third bearing post 1213 and a fourth bearing post 1214.

In some implementations, the fastening base 10 may further include a plurality of rotating posts 17. For example, the rotating post 17 may be connected to a surface that is of the protruding part 13 and that is away from the bottom wall 11. The plurality of rotating posts 17 may be distributed in a ring shape.

In some implementations, there may be six rotating posts 17, and the six rotating posts 17 are evenly spaced from each other and are connected to the surface that is of the protruding part 13 and that is away from the bottom wall 11. The six rotating posts 17 are disposed around the light transmission holes 15 of the fastening base 10.

In some implementations, the fastening base 10 may further include a plurality of fastening posts 19. The fastening post 19 may be connected to a surface of a side that is of the side wall 12 and that is away from the bottom wall 11. The plurality of fastening posts 19 may be disposed around the light transmission hole 15 of the fastening base 10.

In some implementations, the bottom wall 11, the side wall 12, and the protruding part 13 of the fastening base 10 may be an integrated mechanical part. An integral mechanical part formed by two components through an integrated forming process means that, in a process of forming one of the two components, the component is connected to the other component, and the two components can be connected together without reprocessing (for example, bonding, welding, a buckle connection, or a screw connection). It may be understood that the bottom wall 11, the side wall 12, and the protruding part 13 of the fastening base 10 may be an integrated mechanical part, so that overall strength of the fastening base 10 is high.

In another implementation, the bottom wall 11, the side wall 12, and the protruding part 13 of the fastening base 10 may alternatively be fastened through bonding, welding, a buckle connection, a screw connection, or the like.

In some implementations, the fastening base 10 may not include the protruding part 13, and the light transmission hole 15 of the fastening base 10 may be located on the bottom wall 11. The side wall 12 may be disposed around the light transmission hole 15. The rotating post 17 may be connected to a surface of a side that is of the side wall 12 and that is away from the bottom wall 11.

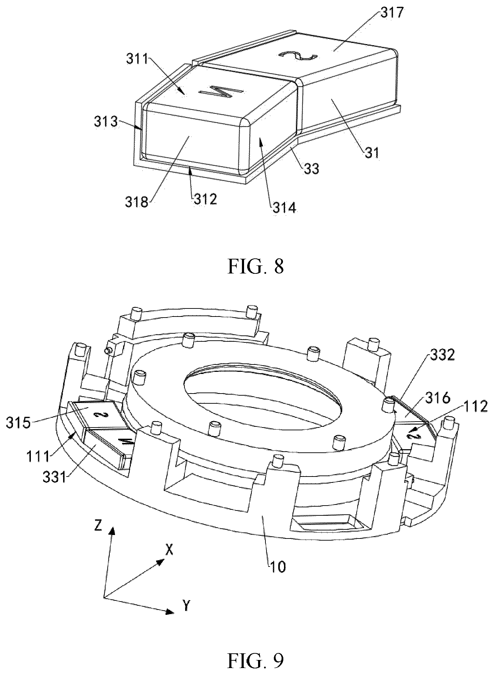

FIG. 7 is a diagram of structures of the magnetic piece 31 and the magnetic conductive piece 33 shown in FIG. 5 according to an implementation. FIG. 8 is a diagram of assembling the magnetic piece 31 and the magnetic conductive piece 33 shown in FIG. 7 according to an implementation. FIG. 9 is a diagram of assembling the magnetic piece 31, the magnetic conductive piece 33, and the fastening base 10 shown in FIG. 5 according to an implementation.

As shown in FIG. 7, FIG. 8, and FIG. 9, the magnetic piece 31 may be disposed on the fastening base 10. For example, the magnetic piece 31 may be fastened to the fastening base 10 by using adhesive or the like.

In some implementations, the magnetic piece 31 may include a top surface 311, a bottom surface 312, an outer side surface 313, and an inner side surface 314. The top surface 311 and the bottom surface 312 may be disposed opposite to each other, and the outer side surface 313 and the inner side surface 314 may be disposed opposite to each other. The outer side surface 313 and the inner side surface 314 are connected between the top surface 311 and the bottom surface 312. The outer side surface 313 of the magnetic piece 31 may be a surface of a side that is of the magnetic piece 31 and that is away from the light transmission hole 15 of the fastening base 10. The inner side surface 314 of the magnetic piece 31 may be a surface of a side that is of the magnetic piece 31 and that is close to the light transmission hole 15. The top surface of the magnetic piece 31 may be a surface of a side that is of the magnetic piece 31 and that is away from the bottom wall 11 of the fastening base 10. The bottom surface of the magnetic piece 31 may be a surface of a side that is of the magnetic piece 31 and that is close to the bottom wall 11 of the fastening base 10.

The magnetic conductive piece 33 may be connected to the bottom surface 312 of the magnetic piece 31. The magnetic conductive piece 33 may be configured to: reduce magnetic field leakage of the magnetic piece 31 on one side of the bottom surface 312 of the magnetic piece 31, and enhance magentic field strength of the magnetic piece 31.

As shown in FIG. 8, a cross section of the magnetic conductive piece 33 may be in an "L" shape. The magnetic conductive piece 33 may be connected to the bottom surface 312 and the outer side surface 313 of the magnetic piece 31. In another implementation, the cross section of the magnetic conductive piece 33 may alternatively be in a "U" shape. The magnetic conductive piece 33 may further be connected to the bottom surface 312, the outer side surface 313, and the inner side surface 314 of the magnetic piece 31.

It may be understood that, the magnetic conductive piece 33 may be disposed to reduce magnetic field leakage of the magnetic piece 31, and reduce magnetic interference caused by a magnet in the motor to the magnetic piece 31 of the variable aperture 100.

The magnetic piece 31 may include a plurality of magnetic sub-pieces. A quantity of magnetic conductive pieces 33 may be in a one-to-one correspondence with a quantity of magnetic sub-pieces included in the magnetic piece 31. For example, the magnetic piece 31 may include two magnetic sub-pieces: a first magnetic sub-piece 315 and a second magnetic sub-piece 316. There are also two magnetic conductive pieces 33, which are respectively a first magnetic conductive piece 331 and a second magnetic conductive piece 332. The first magnetic conductive piece 331 may be connected to the first magnetic sub-piece 315. The second magnetic conductive piece 332 may be connected to the second magnetic sub-piece 316. The first magnetic conductive piece 331 and the first magnetic sub-piece 315 may be disposed in the first groove 111 of the fastening base 10, and the second magnetic conductive piece 332 and the second magnetic sub-piece 316 may be disposed in the second groove 112 of the fastening base 10.

In some implementations, the first magnetic sub-piece 315 and the second magnetic sub-piece 316 may be symmetric with respect to the center of the fastening base 10. When the first magnetic sub-piece 315 and the second magnetic sub-piece 316 are connected to the fastening base 10, symmetry of a structure formed by the first magnetic sub-piece 315, the second magnetic sub-piece 316, and the fastening base 10 is good. In this case, when the first magnetic sub-piece 315, the second magnetic sub-piece 316, and the fastening base 10 cooperate with another component, the first magnetic sub-piece 315, the second magnetic sub-piece 316, and the fastening base 10 are unlikely to tilt due to unstable gravity centers.

In another implementation, there may be one, three, or more magnetic pieces 31 and magnetic conductive pieces 33.

For example, the magnetic piece 31 may include a south pole 317 and a north pole 318. There may be an included angle between a direction of the south pole 317 and a direction of the north pole 318. The magnetic piece 31 may be in a fold line shape.

In another implementation, the magnetic piece 31 may be in an arc shape or a straight line shape. It may be understood that a shape of the magnetic piece 31 may be adaptively adjusted based on an actual situation.

In some implementations, the magnetic conductive piece 33 may alternatively not be disposed in the variable aperture 100.

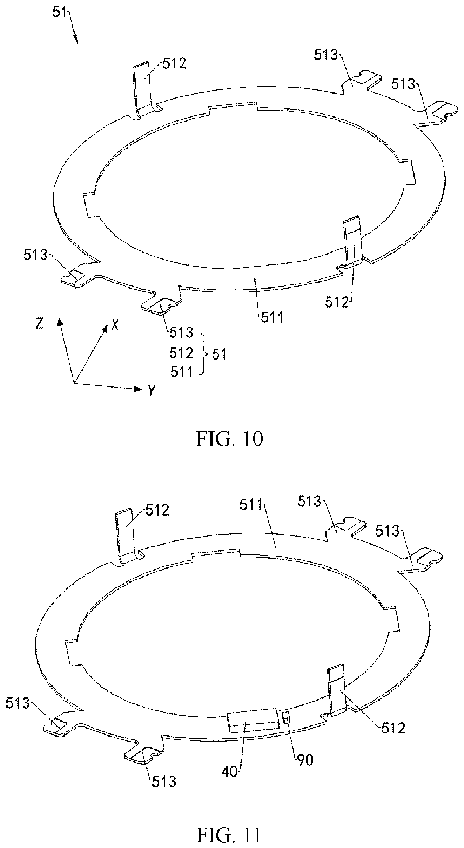

FIG. 10 is a diagram of a structure of the first electrical connector 51 shown in FIG. 5 according to an implementation.

As shown in FIG. 10, the first electrical connector 51 may include a body part 511, a first connection end 512, and a second connection end 513. The first connection end 512 and the second connection end 513 may be spaced from each other and are connected to the body part 511, and are electrically connected to the body part 511.

In some implementations, there may be two first connection ends 512. There may be four second connection ends 513. The first connection end 512 may be configured to connect to the third electrical connector 53 of the electrical connection assembly 50. The second connection end 513 may be configured to electrically connect to an external circuit of the variable aperture 100, so that the first electrical connector 51 of the electrical connection assembly 50 may be electrically connected to the external circuit.

In some implementations, the first electrical connector 51 may be a flexible circuit board.

In some implementations, the first connection end 512 may alternatively be configured to connect to the second electrical connector 52 of the electrical connection assembly 50.

FIG. 11 is a diagram of assembling the drive chip 40 and the first electrical connector 51 shown in FIG. 5 according to an implementation.

As shown in FIG. 11, the drive chip 40 may be fastened to the first electrical connector 51. The drive chip 40 may be electrically connected to the first electrical connector 51. The first electrical connector 51 may be configured to implement an electrical connection between the drive chip 40 and another structure.

For example, the drive chip 40 may be connected to the body part 511 of the first electrical connector 51.

In some implementations, the variable aperture 100 may further include a filter 90. The filter 90 and the drive chip 40 may be spaced from each other on the first electrical connector 51. The filter 90 and the drive chip 40 may be spaced from each other. The filter 90 may be electrically connected to the first electrical connector 51. For example, the filter 90 may be connected to the body part 511 of the first electrical connector 51.

It may be understood that the filter 90 may be electrically connected to the drive chip 40 through the first electrical connector 51. The filter 90 may be configured to filter a current transmitted to the drive chip 40, so as to prevent the drive chip 40 from being interfered by a radio frequency signal. The radio frequency signal may be from another electronic component other than the drive chip 40 inside the electronic device 1, or may be from outside the electronic device 1.

In some implementations, the filter 90 may be a capacitor.

In some implementations, the drive chip 40 and the filter 90 may be fastened to the first electrical connector 51 through welding, or the like.

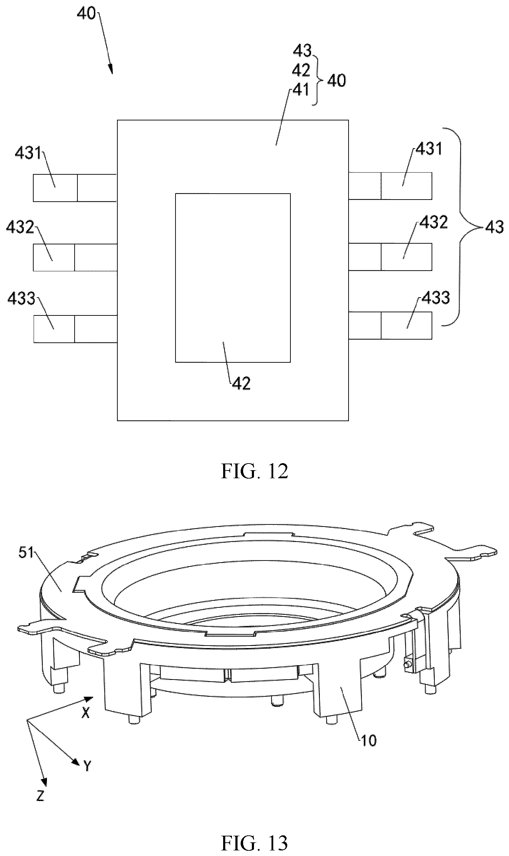

FIG. 12 is a diagram of a structure of the drive chip 40 shown in FIG. 11 according to an implementation.

As shown in FIG. 12, the drive chip 40 may include a substrate 41, an electronic component 42, and a pin 43. The electronic component 42 may be connected to the substrate 41, and the substrate 41 may be used as a carrier of the electronic component 42. One end of the pin 43 is electrically connected to the electronic component 42 on the substrate 41, and the other end of the pin 43 is configured to electrically connect to another structure. The electronic component 42 may be an active component, or may be a passive component like a capacitor, an inductor, or a resistor.

For example, the drive chip 40 may include six pins 43. The six pins 43 may include two power interfaces 431, two data interfaces 432, and two power supply interfaces 433. The power interface 431 and the data interface 432 may be electrically connected to a motor of the camera module 1000. The two power supply interfaces 433 may be configured to output a working current to the coil 32.

As shown in FIG. 11 and FIG. 12, the drive chip 40 may be fastened to the body part 511 of the first electrical connector 51. The two first connection ends 512 may be electrically connected to the two power supply interfaces 433 of the drive chip 40 through the body part 511. The second connection ends 513 may be electrically connected to the two power interfaces 431 and the two data interfaces 432 of the drive chip 40 through the body part 511.

In some implementations, the second connection end 513 of the first electrical connector 51 may be electrically connected to the motor. The drive chip 40 may be electrically connected to a mainboard of the camera module 1000 through a circuit in the motor.

It may be understood that the two power interfaces 431 and the two data interfaces 432 may be electrically connected to one end of the second connection end 513 of the first electrical connector 51. The other end of the second connection end 513 may be electrically connected to the motor. The drive chip 40 may be electrically connected to a mainboard of the camera module 1000 through a circuit in the motor. The mainboard of the camera module 1000 may be electrically connected to the host circuit board 4000 through an external circuit of the camera module 1000. In this way, the drive chip 40 may be electrically connected to the computing control unit 5000 of the electronic device 1. The electronic device 1 may supply power to the drive chip 40 through the two power interfaces 431. The drive chip 40 may obtain, through the data interface 432, an aperture adjustment instruction sent by the computing control unit 5000. The drive chip 40 may further feed back a working status of the variable aperture 100 to the computing control unit 5000 through the data interface 432.

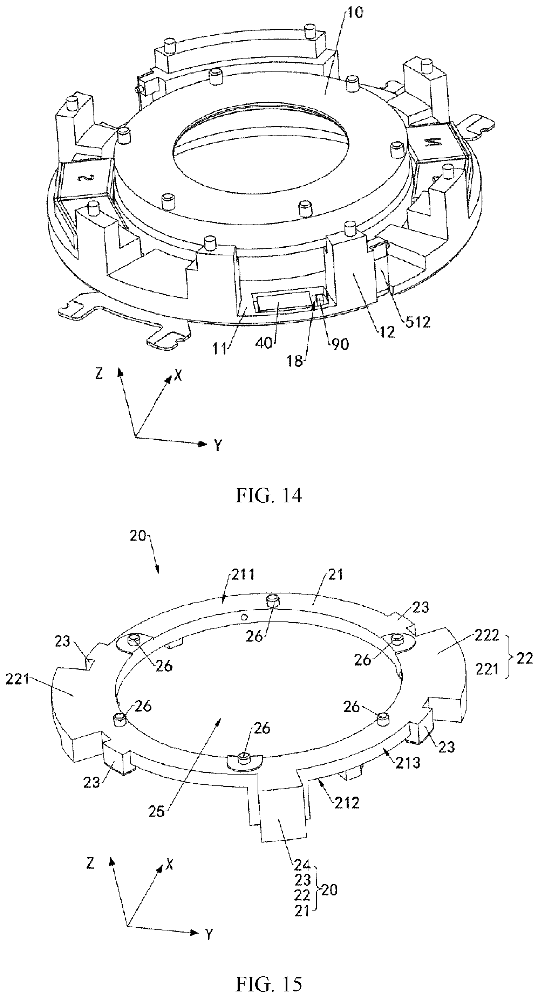

FIG. 13 is a diagram of assembling the drive chip 40, the first electrical connector 51, and the fastening base 10 shown in FIG. 5 according to an implementation. FIG. 14 is a diagram of structures of the drive chip 40, the first electrical connector 51, and the fastening base 10 shown in FIG. 13 from another perspective.

As shown in FIG. 13 and FIG. 14, the first electrical connector 51 may be fastened to the fastening base 10. The drive chip 40 and the filter 90 may be disposed on the fastening base 10 through the first electrical connector 51.

As shown in FIG. 2 and FIG. 14, the body part 511 of the first electrical connector 51 may be connected to a side that is of the fastening base 10 and that is away from the rotating bracket 20. The first connection end 512 and the body part 511 are arranged in a thickness direction (namely, the Z-axis direction) of the variable aperture 100, and the first connection end 512 may be located on a side that is of the body part 511 and that is close to the rotating bracket 20. For example, the first connection end 512 of the first electrical connector 51 may be fastened to the side wall 12 of the fastening base 10.

In some implementations, the fastening base 10 may be provided with a first through hole 18. For example, the first through hole 18 may be located on the bottom wall 11 of the fastening base 10. A top surface and a bottom surface of the bottom wall 11 of the fastening base 10 may communicate with each other through the first through hole 18. The drive chip 40 may be disposed in the first through hole 18, and is exposed relative to the fastening base 10.

In some implementations, the filter 90 may alternatively be disposed in the first through hole 18, and is exposed relative to the fastening base 10.

It may be understood that the drive chip 40 and the filter 90 are located in the first through hole 18, and overlap with the fastening base 10 in the Z-axis direction. This can effectively reduce a thickness of the variable aperture 100 in the Z-axis direction, and also protect the drive chip 40 and the filter 90 to a specific extent, thereby avoiding damage due to interference among the drive chip 40, the filter 90, and another structure around, ensuring running stability of the variable aperture 100, and improving reliability of the variable aperture 100.

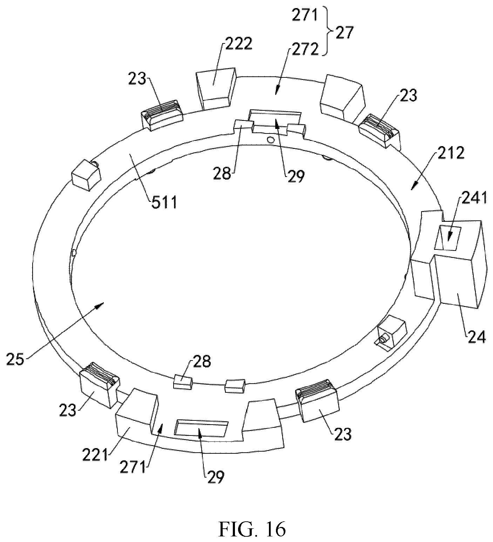

FIG. 15 is a diagram of a structure of the rotating bracket 20 shown in FIG. 5 according to an implementation. FIG. 16 is a diagram of a structure of the rotating bracket 20 shown in FIG. 15 from another perspective.

As shown in FIG. 15 and FIG. 16, the rotating bracket 20 may include a body part 21, an extension part 22, a support part 23, and a protruding block 24. The body part 21 may include a top surface 211, a bottom surface 212, and a circumferential side surface 213. The top surface 211 of the body part 21 is a surface of a side that is of the body part 21 and that is away from the fastening base 10. The top surface 211 and the bottom surface 212 are disposed back to back. The circumferential side surface 213 is connected between the top surface 211 and the bottom surface 212. The extension part 22, the support part 23, and the protruding block 24 may be connected to the circumferential side surface 213 of the body part 21. It may be understood that the bottom surface 212 of the body part 21 may be a part of the bottom surface of the rotating bracket 20.

The rotating bracket 20 may be provided with a light transmission hole 25. External light may pass through the light transmission hole 25 of the rotating bracket 20. For example, the light transmission hole 25 of the rotating bracket 20 may be located on the body part 21 of the rotating bracket 20. In some implementations, the body part 21 may be annular. The light transmission hole 25 is enclosed by an annular inner side surface.

In some implementations, the rotating bracket 20 may further include a plurality of guide posts 26. The guide post 26 may be located on a top surface of the rotating bracket 20. The plurality of guide posts 26 may be disposed around the light transmission hole 25 of the rotating bracket 20.

There may be one or more extension parts 22 of the rotating bracket 20. For example, there may be two extension parts 22 of the rotating bracket 20, which are respectively a first extension part 221 and a second extension part 222. The first extension part 221 and the second extension part 222 may be symmetric with respect to the center of the body part 21 of the rotating bracket 20.

In some implementations, the protruding block 24 of the rotating bracket 20 may be provided with an accommodating groove 241. An opening of the accommodating groove 241 may be located on a bottom surface of the rotating bracket 20.

In some implementations, there may be a plurality of support parts 23. For example, there may be four support parts 23, and the four support parts 23 are spaced from each other and are disposed around the light transmission hole 25 of the rotating bracket 20. The first extension part 221 and the second extension part 222 of the rotating bracket 20 may be respectively located between the two support parts 23.

In some implementations, the rotating bracket 20 may be provided with a limiting slot 27. An opening of the limiting slot 27 may be located on the bottom surface of the rotating bracket 20. For example, there may be two limiting slots 27: a first limiting slot 271 and a second limiting slot 272. The first limiting slot 271 may be located in the first extension part 221 of the rotating bracket 20. The second limiting slot 272 may be located in the second extension part 222 of the rotating bracket 20. An opening of the first limiting slot 271 and an opening of the second limiting slot 272 may face the bottom surface of the rotating bracket 20.

In some implementations, the rotating bracket 20 may further include a limiting structure 28. The limiting structure 28 is connected to the bottom surface 212 of the body part 21 of the rotating bracket 20. The limiting structure 28 may be disposed opposite to the limiting slot 27, and the limiting structure 28 may be located on a side that is of the limiting slot 27 and that is close to the light transmission hole 25 of the rotating bracket 20.

In another implementation, the rotating bracket 20 may not be provided with an extension part 22.

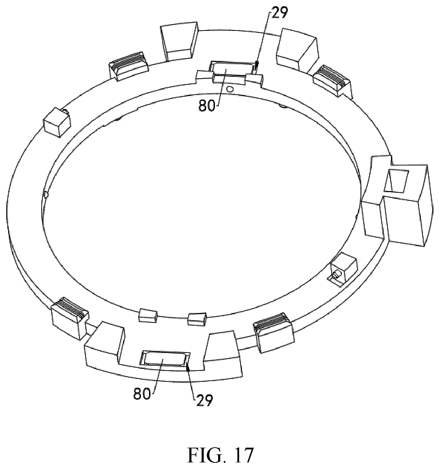

FIG. 17 is a diagram of assembling the rotating bracket 20 and the magnetic suction sheet 80 shown in FIG. 5 according to an implementation.

As shown in FIG. 16 and FIG. 17, the magnetic suction sheet 80 may be connected to the rotating bracket 20. For example, a mounting groove 29 may be further provided on a wall surface of the limiting slot 27. An opening of the mounting groove 29 may face the bottom surface of the rotating bracket 20. The mounting groove 29 may be configured to accommodate the magnetic suction sheet 80.

For example, there may be two magnetic suction sheets 80, and there may also be two magnetic suction sheets 80 as a quantity of mounting groove 29 may be equal to a quantity of magnetic suction sheets. The two magnetic suction sheets 80 are mounted in two mounting grooves 29 in a one-to-one correspondence.

In some implementations, when there are two magnetic suction sheets 80 and two mounting grooves 29, a connection line between the two mounting grooves 29 may pass through a rotation center of the rotating bracket 20. The rotation center of the rotating bracket 20 refers to an intersection point of rotation axes in the X-Y plane when the rotating bracket 20 rotates in the X-Y plane.

For example, one mounting groove 29 may be located on the body part 511 of the rotating bracket 20, and the other mounting groove 29 may be located on the extension part 22 of the rotating bracket 20.

In another implementation, when the quantity of mounting grooves 29 is two, a connection line of the two mounting grooves 29 may alternatively be staggered with the rotation center of the rotating bracket 20.

In another implementation, there may be one, three, or more magnetic suction sheets 80. A quantity of mounting groove 29 may be equal to that of magnetic suction sheets 80.

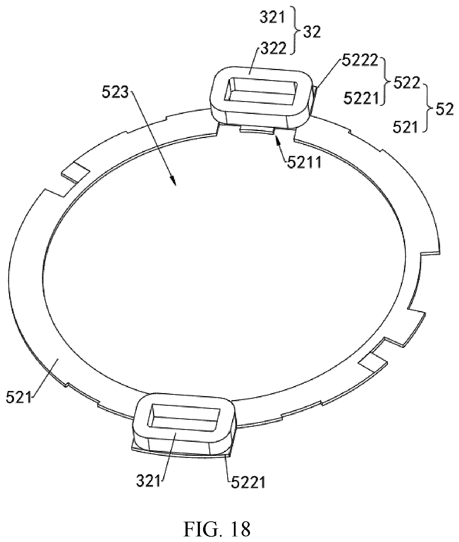

FIG. 18 is a diagram of assembling the coil 32 and the second electrical connector 52 shown in FIG. 5 according to an implementation.

As shown in FIG. 18, the coil 32 may be fastened to the second electrical connector 52, and is electrically connected to the second electrical connector 52. For example, the second electrical connector 52 may include a body part 521 and an extension part 522. The extension part 522 may be connected to the body part 521. The coil 32 may be fastened to the extension part 522 of the second electrical connector 52.

In some implementations, the coil 32 may be fastened to the extension part 522 of the second electrical connector 52 through welding, or the like.

The coil 32 may include a plurality of sub-coils. Correspondingly, there may also be a plurality of extension parts 522 of the second electrical connector 52. For example, the coil 32 may include two sub-coils: a first sub-coil 321 and a second sub-coil 322. There may be two extension parts 522 of the second electrical connector 52: a first extension part 5221 and a second extension part 5222. The first extension part 5221 and the second extension part 5222 of the second electrical connector 52 are respectively connected to two ends of the body part 521 of the second electrical connector 52.

In this way, the first extension part 5221 and the second extension part 5222 of the second electrical connector 52 may be symmetric with respect to the center of the body part 521 of the second electrical connector 52. The first sub-coil 321 may be fastened to the first extension part 5221, and is electrically connected to the first extension part 5221. The second sub-coil 322 may be fastened to the second extension part 5222, and is electrically connected to the second extension part 5222. It may be understood that the first sub-coil 321 and the second sub-coil 322 may be electrically connected to each other through the second electrical connector 52.

The second electrical connector 52 may be provided with a light transmission hole 523. External light may pass through the light transmission hole 523 of the second electrical connector 52. For example, the light transmission hole 523 of the second electrical connector 52 may be located on the body part 521 of the second electrical connector 52.

In some implementations, the body part 521 of the second electrical connector 52 may also be annular.

In some implementations, a limiting hole 5211 may be provided on the body part 521 of the second electrical connector 52. The limiting hole 5211 may be located on a side that is of the body part 521 and that is close to the light transmission hole 15. The limiting hole 5211 communicates with the light transmission hole 523 of the second electrical connector 52.

In another implementation, the coil 32 may include one sub-coil. In this case, there may be one extension part 522.

In another implementation, the second electrical connector 52 may not be provided with an extension part 522. The coil 32 may be connected to the body part 521.

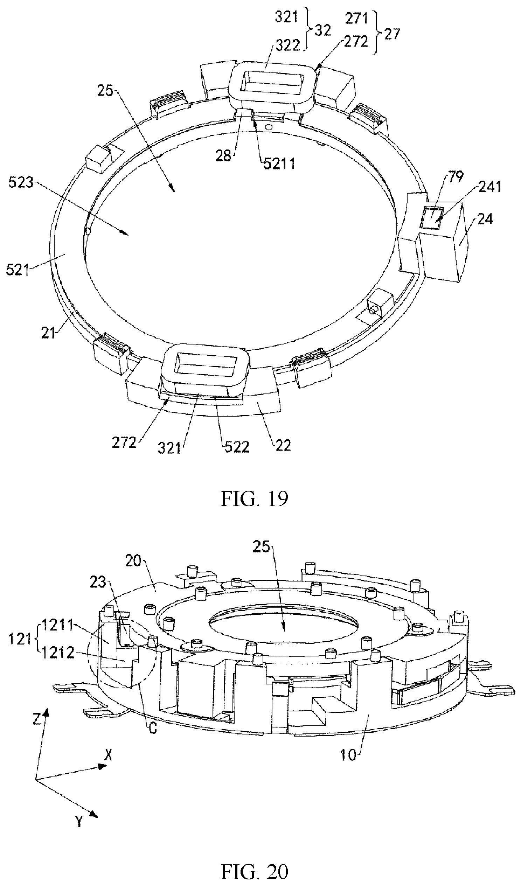

FIG. 19 is a diagram of assembling the coil 32, the second electrical connector 52, and the rotating bracket 20 shown in FIG. 5 according to an implementation.

As shown in FIG. 19, the second electrical connector 52 may be connected to the bottom surface of the rotating bracket 20. The coil 32 may be connected to a surface of a side that is of the second electrical connector 52 and that is away from the rotating bracket 20. It may be understood that the rotating bracket 20 may be used as a carrier of the coil 32 and the second electrical connector 52. The light transmission hole 25 of the rotating bracket 20 may be provided opposite to the light transmission hole 523 of the second electrical connector 52.

For example, the body part 521 of the second electrical connector 52 may be connected to the body part 21 of the rotating bracket 20. The extension part 522 of the second electrical connector 52 may be connected to the extension part 22 of the rotating bracket 20. The coil 32 may be connected to the limiting slot 27 of the extension part 522 of the second electrical connector 52. The limiting structure 28 of the rotating bracket 20 may be located in the limiting hole 5211 of the body part 521 of the second electrical connector 52.

For example, the first sub-coil 321 may be located in the first limiting slot 271. The second sub-coil 322 may be located in the second limiting slot 272. It may be understood that the first limiting slot 271 and the second limiting slot 272 may be configured to limit the first sub-coil 321 and the second sub-coil 322, to reduce a risk of shake of the first sub-coil 321 and the second sub-coil 322 in an axial direction of the rotating bracket 20.

The limiting structure 28 of the rotating bracket 20 may be located on a side that is of the coil 32 and that is close to the light transmission hole 25 of the rotating bracket 20. In this way, the limiting structure 28 may further limit the coil 32, to reduce a risk of a position deviation of the coil 32.

The Hall magnetic piece 70 may be located in the accommodating groove 241 of the protruding block 24. It may be understood that the protruding block 24 may be configured to protect the Hall magnetic piece 70, to reduce a risk that the Hall magnetic piece 70 is damaged due to interference between the Hall magnetic piece 70 and another structure.

FIG. 20 is a diagram of a partial structure of the variable aperture 100 shown in FIG. 4 according to an implementation.

As shown in FIG. 20, the rotating bracket 20 is rotatably connected to the fastening base 10. For example, the support part 23 of the rotating bracket 20 may be disposed opposite to the bearing post 121 of the fastening base 10. The support part 23 of the rotating bracket 20 may be slidably connected to the bearing post 121. For example, the support part 23 of the rotating bracket 20 may be disposed opposite to the second part 1212 of the bearing post 121. The support part 23 of the rotating bracket 20 is slidably connected to a top surface of the second part 1212 of the bearing post 121. The top surface of the second part 1212 of the bearing post 121 is a surface of a side that is of the second part and that is away from the bottom wall 11 of the fastening base 10. In addition, on the X-Y plane, the first part 1211 of the bearing post 121 may be spaced from and adjacent to the rotating bracket 20. The first part 1211 of the bearing post 121 may be located on a side that is of the support part 23 of the rotating bracket 20 and that is away from the light transmission hole 25.

It may be understood that the bearing post 121 of the fastening base 10 may be configured to bear the rotating bracket 20. In addition, the first part 1211 of the bearing post 121 may be located on a side that is of the support part 23 and that is away from the light transmission hole 25.

It may be understood that, when there are a plurality of bearing posts 121, first parts 1211 of the plurality of bearing posts 121 may be disposed around the rotating bracket 20, and on the X-Y plane, the first parts 1211 of the plurality of bearing posts 121 may further limit the rotating bracket 20.

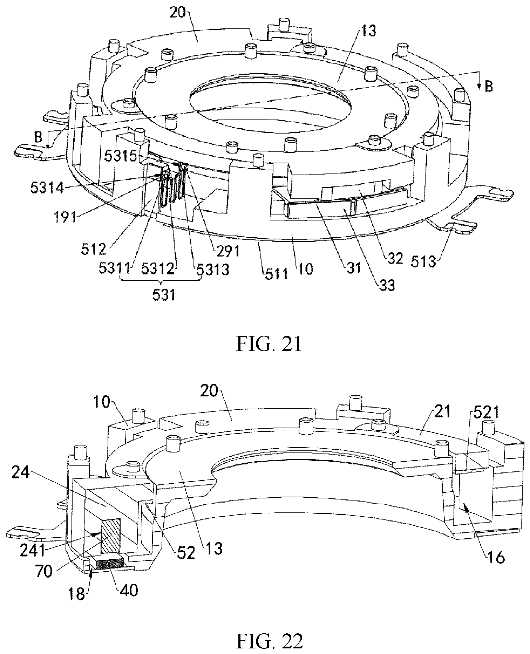

FIG. 21 is a diagram of a partial structure of the variable aperture 100 shown in FIG. 20 from another perspective. FIG. 22 is a cross-sectional diagram of a partial structure of the variable aperture 100 shown in FIG. 21 at B-B according to an implementation.

As shown in FIG. 21 and FIG. 22, the rotating bracket 20 and the second electrical connector 52 may surround the protruding part 13 of the fastening base 10, and the body part 21 of the rotating bracket 20 and the body part 521 of the second electrical connector 52 may be located in the rotating channel 16.

The coil 32 may be disposed facing the magnetic piece 31 on the fastening base 10. The coil 32 may be located on a side that is of the magnetic piece 31 and that is away from the fastening base 10. For example, the first sub-coil 321 may be disposed facing the first magnetic sub-piece 315 on the fastening base 10. The second sub-coil 322 may be disposed facing the second magnetic sub-piece 316 on the fastening base 10.

In some implementations, the coil 32 may be disposed facing the magnetic piece 31, and the coil 32 and the magnetic piece 31 are arranged in a thickness direction of the variable aperture 100. In this way, compared with a case in which the coil 32 and the magnetic piece 31 are arranged in the X-axis direction, in a case in which the coil 32 and the magnetic piece 31 are arranged in the thickness direction of the variable aperture 100, a thickness of the variable aperture 100 can be reduced, and a volume of the variable aperture 100 can be reduced.

The magnetic conductive piece 33 may be located on a side that is of the magnetic piece 31 and that is away from the coil 32. In this way, the magnetic conductive piece 33 may enhance a magnetic field of the magnetic piece 31 at the coil 32.

One end of the third electrical connector 53 may be fastened to the fastening base 10, and is electrically connected to the first electrical connector 51. The other end of the third electrical connector 53 may be fastened to the rotating bracket 20, and is electrically connected to the second electrical connector 52.

It may be understood that, when the drive chip 40 receives an aperture adjustment signal, the drive chip 40 may output a corresponding working current. The working current may sequentially pass through first electrical connector 51, the third electrical connector 53, and the second electrical connector 52 of the electrical connection assembly 50 and is transmitted to the first sub-coil 321 and the second sub-coil 322.

When there is a current signal in the first sub-coil 321, the first sub-coil 321 and the first magnetic sub-piece 315 may generate a force for interaction. In this way, when an action force is applied to the first sub-coil 321, the first sub-coil 321 may drive the rotating bracket 20 to rotate relative to the fastening base 10. In addition, when there is a current signal in the second sub-coil 322, the second sub-coil 322 and the second magnetic sub-piece 316 may generate a force for interaction. In this way, when an action force is applied to the second sub-coil 322, the second sub-coil 322 may drive the rotating bracket 20 to rotate relative to the fastening base 10.

It may be understood that, compared with a solution in which dynamic magnetic driving is used, that is, the coil 32 is disposed on the fastening base 10, the magnetic piece 31 is disposed on the rotating bracket 20, and the magnetic piece 31 drives the rotating bracket 20 to rotate, in this application, a moving coil driving manner is used, that is, the magnetic piece 31 is disposed on the fastening base 10, the coil 32 is disposed on the rotating bracket 20, and the coil 32 drives the rotating bracket 20 to rotate, to change a hole diameter of the aperture hole 101. This can avoid affecting adjustment of the variable aperture 100 as the magnetic piece 31 is affected by a magnet (for example, a magnet in a motor) in another component near the variable aperture 100.

It may be understood that, a force-bearing direction of the first sub-coil 321 is changed by changing a magnetic position of the first magnetic sub-piece 315 (namely, positions of the south pole and the north pole of the first magnetic sub-piece 315) or a direction of a current signal on the first sub-coil 321, to change a rotation direction of the rotating bracket 20. In addition, a force-bearing direction of the second sub-coil 322 is changed by changing a magnetic position of the second magnetic sub-piece 316 (namely, positions of the south pole and the north pole of the second magnetic sub-piece 316) or a direction of a current signal on the second sub-coil 322, to change a rotation direction of the rotating bracket 20.

In some implementations, when the first sub-coil 321 and the second sub-coil 322 jointly drive the rotating bracket 20 to rotate relative to the fastening base 10, the first sub-coil 321 and the second sub-coil 322 are symmetrical with respect to a rotation center of the rotating bracket 20. In this way, action forces of the first sub-coil 321 and the second sub-coil 322 on positions of the rotating bracket 20 are balanced. The rotating bracket 20 is unlikely to tilt due to an unbalanced force.

It may be understood that the south pole 317 and the north pole 318 of the magnetic piece 31 are disposed at an included angle, and directions of ampere forces applied to the first sub-coil 321 and the second sub-coil 322 may be tangent to the axial direction of the rotating bracket 20, and are parallel to a plane on which the rotating bracket 20 is located. Most of the ampere forces applied to the first sub-coil 321 and the second sub-coil 322 may be used to drive the rotating bracket 20 to rotate. Utilization of the ampere forces applied to the first sub-coil 321 and the second sub-coil 322 is high.

In some implementations, the first connection end 512 of the first electrical connector 51 and the body part 511 may be arranged in the thickness direction of the variable aperture 100, and the first connection end 512 may be located on a side that is of the body part 511 and that is close to the rotating bracket 20. **In** this way, the first spring plate 531 and the second spring plate 532 may be electrically connected to the drive chip 40 through the first connection end 512 and the body part 511. A distance between the first connection end 512 and the rotating bracket 20 may be short so that the first spring plate 531 and the second spring plate 532 are connected to the first connection end 512 of the first electrical connector 51.

As shown in FIG. 22, the protruding part 13 of the rotating bracket 20 may be disposed opposite to the first through hole 18 of the fastening base 10. The Hall magnetic piece 70 located in the accommodating groove 241 on the protruding part 13 may be disposed facing the drive chip 40 located in the first through hole 18.

**In** some implementations, the drive chip 40 may include a Hall effect sensor (not shown in the figure). The drive chip 40 may be configured to detect magentic field strength when the Hall magnetic piece 70 is at different positions. It may be understood that an angle at which the rotating bracket 20 rotates relative to the fastening base 10 may be determined by using the magentic field strength of the Hall magnetic piece 70 detected by the drive chip 40, to accurately determine an aperture size in a state in which the variable aperture 100 is located.

In some implementations, the Hall magnetic piece 70 may alternatively not be disposed in the variable aperture 100.

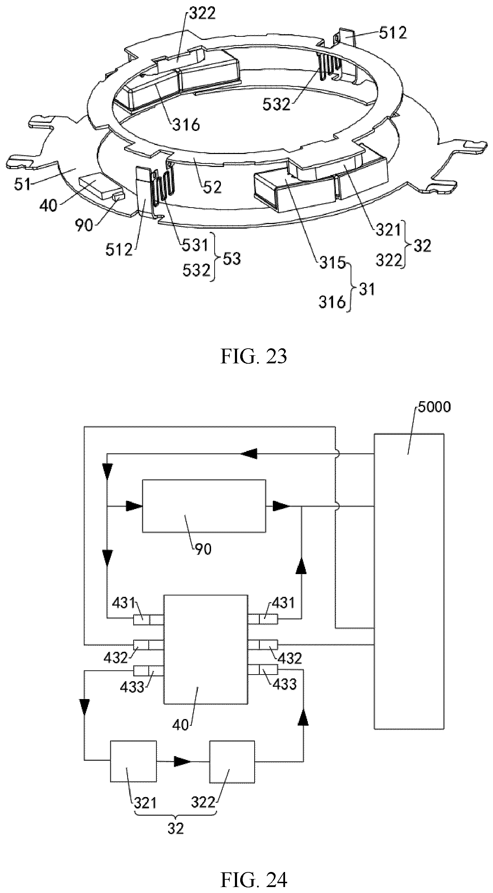

FIG. 23 is a diagram of assembling the drive chip 40, the electrical connection assembly 50, the drive assembly 30, and the filter 90 shown in FIG. 21 according to an implementation.

As shown in FIG. 23, the third electrical connector 53 may be a spring plate. The third electrical connector 53 may include a first spring plate 531 and a second spring plate 532 that are spaced from each other. Both one part of the first spring plate 531 and one part of the second spring plate 532 may be fastened to the fastening base 10, and are electrically connected to the first connection end 512 of the first electrical connector 51. The other part of the first spring plate 531 and the other part of the second spring plate 532 may be fastened to the rotating bracket 20, and are electrically connected to the second electrical connector 52 of the electrical connection assembly 50. The first spring plate 531 and the second spring plate 532 may be respectively connected to the two first connection ends 512 of the first electrical connector 51 in a one-to-one correspondence.

The first spring plate 531 and the second spring plate 532 may be configured to implement an electrical connection between the first electrical connector 51 and the second electrical connector 52 of the electrical connection assembly 50. An output end of the second electrical connector 52 may be electrically connected to an input end of the first electrical connector 51 through the first spring plate 531. An input end of the second electrical connector 52 may be electrically connected to an output end of the first electrical connector 51 through the second spring plate 532. It may be understood that, compared with a solution in which the third electrical connector 53 is a flexible circuit board, in this application, assembling between the spring plates and each of the fastening base 10 and the rotating bracket 20 is simpler, assembling difficulty is reduced, and electrical connection reliability of the variable aperture 100 is better.

FIG. 24 is a diagram of an electrical connection among the drive chip 40, the coil 32, the electrical connection assembly 50, and the computing control unit 5000 of the electronic device 1 shown in FIG. 23 according to an implementation.

As shown in FIG. 23 and FIG. 24, the drive chip 40 may be electrically connected to the computing control unit 5000 of the electronic device 1. The computing control unit 5000 may be configured to control motion of the variable aperture 100, to adjust an amount of light admitted by the camera module 1000.

For example, the power interface 431 and the data interface 432 of the drive chip 40 may be electrically connected to the motor through the second connection end 513 of the first electrical connector 51, and then the drive chip 40 may be electrically connected to the mainboard of the camera module 1000 through a circuit trace inside the motor. The mainboard of the camera module 1000 may be electrically connected to the host circuit board 4000 through an external circuit of the camera module 1000. In this way, the drive chip 40 may be electrically connected to the computing control unit 5000 of the electronic device 1.

It may be understood that the drive chip 40 may obtain, through the data interface 432, an aperture adjustment instruction sent by the computing control unit 5000. In addition, the electronic device 1 may supply power to the drive chip 40 through the two power interfaces 431. The drive chip 40 converts, based on the aperture adjustment instruction, power supplied through the power interface 431 into a working current of the coil 32. After being powered on, the coil 32 and the magnetic piece may generate a force for interaction. In this way, when an action force is applied to the coil 32, the coil 32 may drive the rotating bracket 20 to rotate relative to the fastening base 10.

A larger current signal in the first sub-coil 321 indicates a larger interaction force generated between the first sub-coil 321 and the first magnetic sub-piece 315, and a larger angle at which the first sub-coil 321 can drive the rotating bracket 20 to rotate relative to the fastening base 10. Therefore, the drive chip 40 may convert, based on an aperture size specifically required in the aperture adjustment instruction, the power supplied through the power interface 431 into currents of different magnitudes, and transmit the currents to the coil 32. In this way, a magnitude of the current transmitted to the coil 32 is controlled, so that the angle at which the coil 32 drives the rotating bracket 20 to rotate relative to the fastening base 10 may be adjusted, to implement size adjustment of the aperture hole 101 of the variable aperture 100.

In some implementations, a Hall effect sensor may be disposed on the drive chip 40, to detect magentic field strength of the Hall magnetic piece 70 at different positions. The drive chip 40 may determine a position of the Hall magnetic piece 70 based on current magentic field strength of the Hall magnetic piece 70, that is, accurately determine an aperture size of the aperture hole 101 of the variable aperture 100, and then accurately determine a luminous flux entering the lens assembly 200 from the current position. In addition, when there is a difference between the current magentic field strength of the Hall magnetic piece 70 and a target magentic field strength, the drive chip 40 may adjust a magnitude of an output working current based on the difference between the current magentic field strength of the Hall magnetic piece 70 and the target magentic field strength, so that an angle at which the coil 32 drives the rotating bracket 20 to rotate reaches a target angle, and a required target aperture size is obtained, thereby implementing closed-loop control.

In some implementations, the drive chip 40 may further feed back a working status of the variable aperture 100 to the computing control unit 5000 through the data interface 432. For example, the drive chip 40 may feed back the current magentic field strength of the Hall magnetic piece 70 to the computing control unit 5000 through the data interface 432.

In some implementations, the filter 90 may be connected in parallel to the drive chip 40.

In some implementations, one end of each of the two first connection ends 512 on the first electrical connector 51 may be electrically connected to each of two power supply interfaces 433 of the drive chip 40. One end of the first spring plate 531 and one end of the second spring plate 532 may be connected to the two first connection ends 512 of the first electrical connector 51 in a one-to-one correspondence. The other end of the first spring plate 531 and the other end of the second spring plate 532 may be electrically connected to the second electrical connector 52. In addition, the coil 32 is electrically connected to the second electrical connector 52. In this way, a working current output by the drive chip 40 may sequentially pass through the first electrical connector 51, the third electrical connector 53, and the second electrical connector 52, to reach the coil 32.

In some implementations, the first sub-coil 321 and the second sub-coil 322 may be connected in series in a circuit. For example, a flow path of the working current output by the drive chip 40 to the coil 32 may be: drive chip 40-first electrical connector 51-first spring plate 531-second electrical connector 52-first sub-coil 321-second sub-coil 322-second electrical connector 52-second spring plate 532-first electrical connector 51-drive chip 40.

In some implementations, the third electrical connector 53 may not be disposed on the electrical connection assembly 50. The second electrical connector 52 may be directly connected to the first electrical connector 51.

It may be understood that, in a moving coil driving manner, in a solution in which the drive chip 40 is fastened to the rotating bracket 20, the data interface 432 and the power interface 431 of the drive chip 40 need to be connected to the first electrical connector 51 through the third electrical connector 53 and the second electrical connector 52, and then electrically connected to an external circuit of the variable aperture 100 through the first electrical connector 51. According to the variable aperture 100 in this application, in the moving coil driving manner, the drive chip 40 is fastened to the fastening base 10, and an electrical connection between the drive chip 40 and the coil 32 is implemented through the electrical connection assembly 50, so that a connection line structure in the electrical connection assembly 50 can be simplified. A connection line in the third electrical connector 53 is simple. The coil 32 is electrically connected to a power supply interface of the drive chip 40 through the second electrical connector 52 and the first electrical connector 51, so that a cable for connecting the data interface 432 of the drive chip 40 from the rotating bracket 20 to the first electrical connector 51 may be not needed, and resistance of the rotating bracket 20 during rotation is small. This helps reduce energy consumption of the variable aperture 100.

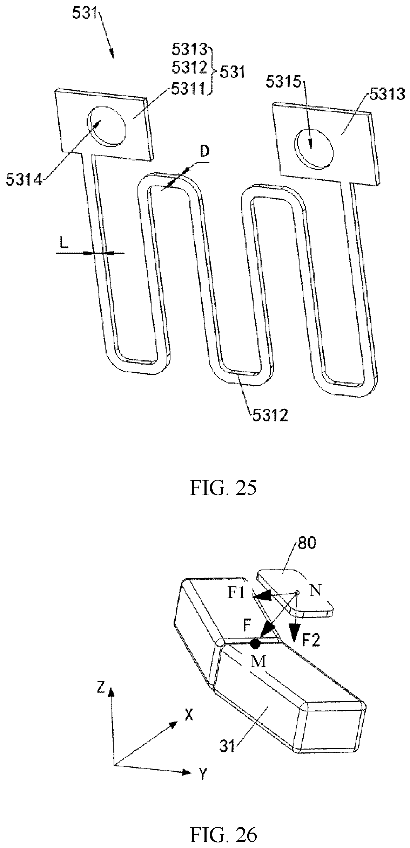

FIG. 25 is a diagram of a structure of the first spring plate 531 shown in FIG. 23 according to an implementation. It may be understood that structures of the first spring plate 531 and the second spring plate 532 may be the same. In FIG. 25, a structure of the first spring plate 531 is used as an example for illustration.

As shown in FIG. 23, the first spring plate 531 may include a first end 5311, a deformation section 5312, and a second end 5313. The deformation section 5312 may be connected between the first end 5311 and the second end 5313. The first end 5311 may be fastened to the fastening base 10. The second end 5313 may be fastened to the rotating bracket 20.

For example, the fastening base 10 may further include a first connection post 191. The first connection post 191 may be disposed on the side wall 12 of the fastening base 10. The rotating bracket 20 may include a second connection post 291. The first end 5311 may be provided with a first fastening hole 5314. The second end 5313 may be provided with a second fastening hole 5315. The first fastening hole 5314 may be sleeved on the first connection post 191 of the fastening base 10. The second fastening hole 5315 may be sleeved on the second connection post 291 on the rotating bracket 20. In this way, a connection between the first spring plate 531 and both the fastening base 10 and the rotating bracket 20 is more stable.

It may be understood that the deformation section 5312 may deform when the first sub-coil 321 and the second sub-coil 322 drive the rotating bracket 20 to rotate relative to the fastening base 10. The deformation may include stretching, twisting, and the like.

In some implementations, the first end 5311 of the first spring plate 531 may be fastened to the fastening base 10 through hot riveting or adhesive. The second end 5313 of the first spring plate 531 may also be fastened to the rotating bracket 20 through hot riveting or adhesive.

In some implementations, the first end 5311 of the first spring plate 531 may be electrically conducted with the first electrical connector 51 of the electrical connection assembly 50 through welding. The second end 5313 of the first spring plate 531 may be electrically conducted with the second electrical connector 52 of the electrical connection assembly 50 through welding.

In some implementations, the first spring plate 531 and the second spring plate 532 may be made of a copper alloy.

In some implementations, the first spring plate 531 and the second spring plate 532 may be formed through an etching process.

In some implementations, the deformation sections 5312 of the first spring plate 531 and the second spring plate 532 may be continuously bent in an "S" shape. In this way, the first spring plate 531 and the second spring plate 532 may increase a length and a circular arc as much as possible in the limited space, to reduce a stiffness coefficient (a k value) of the spring plate, and improve reliability of the third electrical connector 53. In another implementation, the deformation sections 5312 of the first spring plate 531 and the second spring plate 532 may alternatively be continuously bent in a "Z" shape.

In some implementations, a rotation radius of the rotating bracket 20 may be 6 millimeters (millimeters, mm). A rotation angle of the rotating bracket 20 may be ±5°. The rotation radius of the rotating bracket 20 may be a distance from a rotation center of the rotating bracket 20 to a connection point between the third electrical connector 53 and the rotating bracket 20.

In some implementations, a rotation torque of the first spring plate 531 or the second spring plate 532 may be less than or equal to 10 millinewton millimeters (millinewton millimeter, mN·mm). The rotation radius of the rotating bracket 20 may be 6 mm. When the rotation angle of the rotating bracket 20 may be ±5°, the stiffness coefficient (k value) of the first spring plate 531 or the second spring plate 532 may be less than or equal to 1.6 millinewtons per millimeter (mN/mm).

It may be understood that, if the rotation torque of the spring plate is larger, the rotating bracket 20 needs to overcome larger resistance caused by spring deformation during rotation, and an action force between the coil 32 and the magnetic piece 31 also needs to be larger. In other words, when the rotating bracket 20 is at a same rotation angle, a larger rotation torque of the spring plate indicates a larger current that needs to be output to the coil 32, and higher power consumption of the variable aperture 100. Therefore, the rotation torque is set to be less than or equal to 10 mN·mm, and the stiffness coefficient (k value) is set to be less than or equal to 1.6 millinewtons per millimeter (mN/mm). This helps reduce a force generated by the rotating bracket 20 due to spring plate deformation in a rotation process, and can reduce energy consumption of the variable aperture 100.

In another implementation, the stiffness coefficient (k value) of the first spring plate 531 or the second spring plate 532 may also be within a range greater than 1.6 mN/mm.

In some implementations, a thickness D of the first spring plate 531 and a thickness D of the second spring plate 532 may be within a range of 0.03 mm to 0.05 mm.

In some implementations, a radial width L of the first spring plate 531 and a radial width L of the second spring plate 532 may be within a range of 0.06 mm to 0.1 mm.

It may be understood that, the thickness D and the radial width L of the first spring plate 531 and the second spring plate 532 are controlled within a small range. This helps reduce the stiffness coefficients (k values) of the first spring plate 531 and the second spring plate 532, so that a rotation torque of the first spring plate 531 and a rotation torque of the second spring plate 532 are small, and an energy loss of the variable aperture 100 in an aperture adjustment process is reduced.

In another implementation, the thickness D of the first spring plate 531 and the thickness D of the second spring plate 532 may alternatively be within a range greater than 0.05 mm or less than 0.03 mm. The radial width L of the first spring plate 531 and the radial width L of the second spring plate 532 may alternatively be within a range greater than 0.1 mm or less than 0.06 mm.

It may be understood that the first spring plate 531 and the second spring plate 532 may be configured to implement the electrical connection between the first electrical connector 51 and the second electrical connector 52 of the electrical connection assembly 50. In addition, in a process in which the rotating bracket 20 returns to the initial state after rotation, the first spring plate 531 and the second spring plate 532 may provide an elastic force while restoring deformation, to help the rotating bracket 20 return and increase a return speed of the rotating bracket 20.

FIG. 26 is a diagram of assembling the magnetic piece 31 and the magnetic suction sheet 80 shown in FIG. 5 according to an implementation.

As shown in FIG. 26, in the thickness direction (the Z-axis direction) of the variable aperture (100), a projection of a magnetic field center N of the magnetic suction sheet 80 on the fastening base 10 (the X-Y plane) is staggered with a projection of a magnetic field center M of the magnetic piece 31 on the fastening base 10 (the X-Y plane). In this way, an interaction force F at an acute angle with the X-Y plane may be generated between the magnetic suction sheet 80 and the magnetic piece 31. F can be divided into F1 and F2. An F1 direction faces the magnetic piece 31 on the X-Y plane along the magnetic field center N. An F2 direction faces the magnetic piece 31 in the Z-axis direction along the magnetic field center N.

It may be understood that the magnetic suction sheet may help the rotating bracket 20 quickly return to an initial position after the rotating bracket 20 rotates relative to the fastening base 10.

In some implementations, the magnetic suction sheet 80 may be disposed opposite to the magnetic piece 31. In this way, an interaction force generated between the magnetic suction sheet 80 and the magnetic piece 31 is strong, which helps the rotating bracket 20 quickly return to the initial position.

In some implementations, there may be two magnetic suction sheets 80.

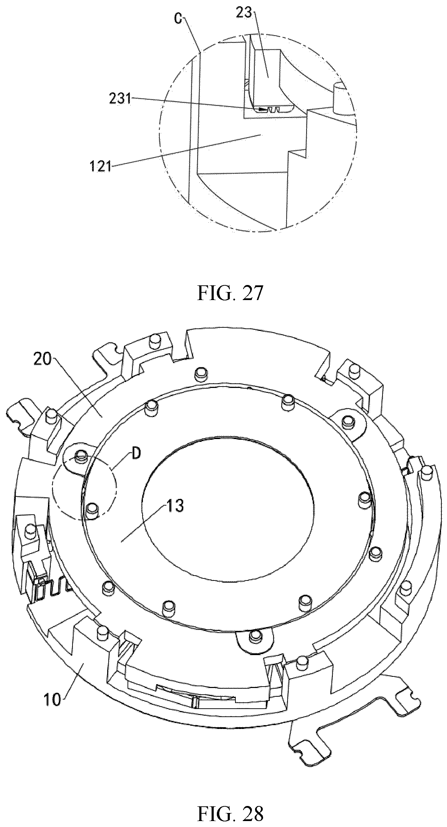

FIG. 27 is an enlarged view at C shown in FIG. 20 according to an implementation.

As shown in FIG. 27, a groove 231 may be provided on a surface that is of the support part 23 and that is connected to the bearing post 121, and an opening of the groove 231 may face the bearing post 121. It may be understood that, when the support part 23 is slidably connected to the bearing post 121, a contact area between the support part 23 and the bearing post 121 may be reduced by providing the groove 231, thereby reducing a friction force.

There may be one or more grooves.

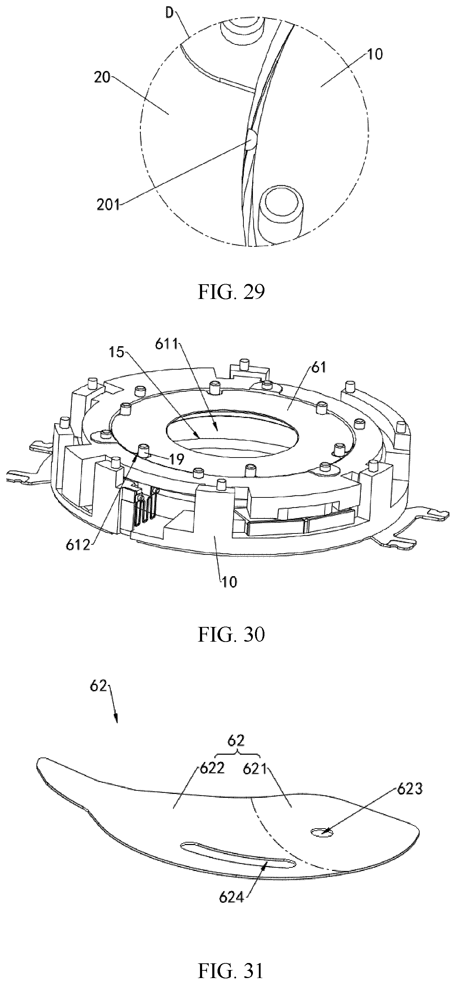

FIG. 28 is a diagram of a partial structure of the variable aperture 100 shown in FIG. 21 from still another perspective. FIG. 29 is an enlarged view at D shown in FIG. 28 according to an implementation.

As shown in FIG. 28 and FIG. 29, the rotating bracket 20 may be disposed around the protruding part 13 of the fastening base 10, and the variable aperture 100 may further include a protrusion part 201. The protrusion part 201 may be located between the rotating bracket 20 and the protruding part 13 of the fastening base 10. It may be understood that, the protrusion part 201 may be configured to limit the rotating bracket 20 and the fastening base 10 on the X-Y plane.

In some implementations, there may be one or more protrusion parts 201. For example, there may be four protrusion parts 201, and the four protrusion parts 201 are evenly spaced from each other around the protruding part 13 of the fastening base 10.

In some implementations, the protrusion part 201 may be located on a surface that is of the body part 21 of the rotating bracket 20 and that is close to the protruding part 13 of the fastening base 10.

In some implementations, the protrusion part 201 and the rotating bracket 20 may be an integrated mechanical part.

In some implementations, the protrusion part 201 may alternatively be located on a surface that is of the protruding part 13 of the fastening base 10 and that is close to the rotating bracket 20.

In some implementations, the protrusion part 201 and the fastening base 10 may be an integrated mechanical part.

In some implementations, a shape of the protrusion part 201 may be a dot type or a line segment type. It may be understood that a specific shape of the protrusion part 201 is not limited in this application, and a person skilled in the art may design the protrusion part 201 according to a requirement.

It may be understood that, compared with a solution in which a roll ball is disposed between the rotating bracket 20 and the fastening base 10 for limiting, in this application, the protrusion part 201 is used for limiting the rotating bracket 20 and the fastening base 10 through merely friction between a plastic part and a plastic part, so that costs can be reduced, a structure complexity of the variable aperture 100 is low, and an assembling process of the variable aperture 100 can be simplified.

FIG. 30 is a diagram of a partial structure of the variable aperture 100 shown in FIG. 4 according to an implementation.

As shown in FIG. 30, the gasket 61 may be annular. The gasket 61 has a light transmission hole 611. The light transmission hole 611 of the gasket 61 may communicate with the light transmission hole 15 of the fastening base 10. A hole diameter of the light transmission hole 611 of the gasket 61 remains unchanged. The light transmission hole 611 of the gasket 61 may be used as a gear of the aperture hole 101 of the variable aperture 100.

In some implementations, the gasket 61 may be provided with a plurality of fastening holes 612 spaced from each other. For example, a quantity of fastening holes 612 may be equal to a quantity of fastening posts 19 of the fastening base 10, that is, a quantity of fastening holes 612 may be six. In some implementations, the plurality of fastening holes 612 may be located around the light transmission hole 611 of the gasket 61, and are provided around the light transmission hole 611 of the gasket 61.

In some implementations, the gasket 61 is fastened to the top of the fastening base 10. For example, the plurality of fastening posts 19 of the fastening base 10 pass through the plurality of fastening holes 612 of the gasket 61 in a one-to-one correspondence, that is, one fastening post 19 passes through one fastening hole 612. It may be understood that, through cooperation between the fastening hole 612 of the gasket 61 and the fastening post 19 of the rotating bracket 20, the gasket 61 is unlikely to shake on the X-Y plane.

In an implementation, a central axis of the light transmission hole 611 of the gasket 61 may coincide with a central axis of the light transmission hole 15 of the fastening base 10. The central axis of the light transmission hole 611 of the gasket 61 is a virtual axis that passes through the center of the light transmission hole 611 of the gasket 61, and is perpendicular to a plane on which the gasket 61 is located. In another embodiment, a central axis of the light transmission hole 611 of the gasket 61 may not coincide with a central axis of the light transmission hole 15 of the fastening base 10.

FIG. 31 is a diagram of a structure of the blade 62 shown in FIG. 5 from different perspectives according to an implementation. FIG. 31 uses one of the blades 62 as an example to describe a structure of the blade 62 in detail.

As shown in FIG. 31, the blade 62 may include a first part 621 and a second part 622 connected to the first part 621. The first part 621 of the blade 62 is mainly configured to connect to the fastening base 10. The second part 622 of the blade 62 is mainly configured to connect to the rotating bracket 20. It should be understood that, for ease of describing a specific structure of the blade 62, FIG. 31 schematically divides the first part 621 of the blade 62 and the second part 622 of the blade 62 by using dotted lines, but this does not affect an integral structure of the blade 62.

For example, the first part 621 of the blade 62 may be provided with a rotation hole 623. For example, the rotation hole 623 may be a round hole.

For example, the second part 622 of the blade 62 may be provided with a guide hole 624. For example, the guide hole 624 may be an arc-shaped hole.

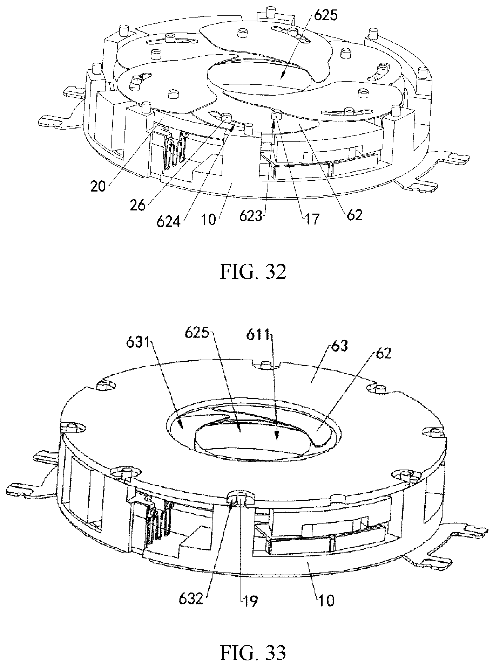

FIG. 32 is a diagram of a partial structure of the variable aperture 100 shown in FIG. 4 according to an implementation. FIG. 32 uses one blade 62 as an example to specifically describe a connection relationship among the blade 62, the fastening base 10, and the rotating bracket 20.

As shown in FIG. 32, the first part 621 of the blade 62 is connected to the fastening base 10. The second part 622 of the blade 62 may be connected to the rotating bracket 20.

For example, the first part 621 of the blade 62 may be rotatably connected to the fastening base 10. For example, a plurality of rotating posts 17 of the fastening base 10 pass through rotation holes 623 of a plurality of blades 62 in a one-to-one correspondence, that is, one rotating post 17 of the fastening base 10 passes through a rotation hole 623 of one blade 62. It may be understood that a hole wall of the rotation hole 623 may rotate relative to the rotating post 17. In this way, through cooperation between the rotation hole 623 and the rotating post 17, the blade 62 can rotate relative to the fastening base 10 by using the rotating post 17 as a rotating shaft. In this case, the rotating post 17 may not only be used to limit the gasket 61, but also be used as the rotating shaft of the blade 62.

The second part 622 of the blade 62 may be slidably connected to the rotating bracket 20. For example, a plurality of guide posts 26 of the rotating bracket 20 pass through guide holes 624 of the plurality of blades 62 in a one-to-one correspondence, that is, one guide post 26 of the rotating bracket 20 passes through a guide hole 624 of one blade 62. It may be understood that the guide post 26 may slide relative to the hole wall of the guide hole 624. In this way, the blade 62 may be slidably connected to the rotating bracket 20 through fit between the guide hole 624 and the guide post 26.

The plurality of blades 62 may be distributed in an annular manner, and jointly enclose the light transmission hole 625. The light transmission hole 625 enclosed by the plurality of blades 62 may communicate with the light transmission hole 611 of the gasket 61. The plurality of blades 62 may be located on the top of the gasket 61, that is, the plurality of blades 62 may be located on a side that is of the gasket 61 and that is away from the fastening base 10. It may be understood that, because the first part 621 of each blade 62 may be rotatably connected to the fastening base 10, and the second part 622 of each blade 62 may be slidably connected to the rotating bracket 20. In this case, the coil 32 may drive the rotating bracket 20 to rotate relative to the fastening base 10 through cooperation with the magnetic piece 31. The plurality of blades 62 may be unfolded or folded, to increase or decrease a hole diameter of the light transmission hole 625 enclosed by the plurality of blades 62.

In an implementation, when the variable aperture 100 is in an initial state or an intermediate state, a maximum hole diameter of the light transmission hole 625 of the plurality of blades 62 is less than a hole diameter of the light transmission hole 611 of the gasket 61. In this case, the light transmission hole 625 of the plurality of blades 62 forms the aperture hole 101 of the variable aperture 100. That is, the light transmission hole 625 of the plurality of blades 62 may control a luminous flux of ambient light.

When the variable aperture 100 is in an end state, a hole diameter of the light transmission hole 625 of the plurality of blades 62 is greater than or equal to a hole diameter of the light transmission hole 611 of the gasket 61. The light transmission hole 611 of the gasket 61 may form the aperture hole 101 of the variable aperture 100.

It may be understood that, the coil 32 may drive the rotating bracket 20 to rotate relative to the fastening base 10, and the plurality of blades 62 may be unfolded or folded to increase or decrease a hole diameter of the light transmission hole 625 enclosed by the plurality of blades 62, so that a size of the aperture hole 101 of the variable aperture 100 can be adjusted, and an amount of light admitted by the camera module 1000 can be controlled.

In an implementation, the central axis of the light transmission hole 625 of the plurality of blades 62 may coincide with the central axis of the rotating bracket 20. The central axis of the light transmission hole 625 of the plurality of blades 62 is a virtual axis that passes through the center of the light transmission hole 625 of the plurality of blades 62, and is perpendicular to a plane on which the plurality of blades 62 are located. In another embodiment, the central axis of the light transmission hole 625 of the plurality of blades 62 may not coincide with the central axis of the rotating bracket 20.

In another implementation, the first part 621 of the blade 62 may alternatively be slidably connected to the fastening base 10. The second part 622 of the blade 62 may be rotatably connected to the rotating bracket 20.

FIG. 33 is a diagram of a partial structure of the variable aperture 100 shown in FIG. 4 according to an implementation.

As shown in FIG. 33, the upper cover 63 may be of an annular structure. The light transmission hole 631 may be enclosed inside the upper cover 63. The upper cover 63 may be provided with a plurality of limiting holes 632 spaced from each other. The plurality of limiting holes 632 may be provided around the light transmission hole 631 of the upper cover 63.

In some implementations, the upper cover 63 may be fastened to the side wall 12 of the fastening base 10. The upper cover 63 may be located on a side on which the plurality of blades 62 are away from the fastening base 10, and the upper cover 63 may cover the plurality of blades 62. In the Z-axis direction, the upper cover 63 may limit the plurality of blades 62, to prevent the plurality of blades 62 from falling out.

In some implementations, the light transmission hole 631 of the upper cover 63 may be provided opposite to the light transmission hole 625 of the plurality of blades 62. Ambient light may be propagated to the light transmission hole 625 of the plurality of blades 62 through the light transmission hole 631 of the upper cover 63, pass through the light transmission hole 611 of the gasket 61, and finally enter the accommodating space 14 of the fastening base 10, to be received by a camera.

In some implementations, some of the fastening posts 19 of the fastening base 10 may be located in the limiting holes of the upper cover 63. It may be understood that, through the cooperation between the limiting hole of the upper cover 63 and the fastening post 19 of the fastening base 10, the upper cover 63 is unlikely to shake on the X-Y plane.

In some implementations, a central axis of the light transmission hole 631 of the upper cover 63 may coincide with the central axis of the light transmission hole 625 of the plurality of blades 62. In another embodiment, the central axis of the light transmission hole 631 of the upper cover 63 may not coincide with the central axis of the light transmission hole 625 of the plurality of blades 62.

The foregoing specifically describes a structure of the variable aperture 100 with reference to related accompanying drawings. The variable aperture 100 provided in this application includes the fastening base 10, the rotating bracket 20, the coil 32, the magnetic piece 31, the drive chip 40, the first electrical connector 51, the second electrical connector 52, and the plurality of blades 62. The rotating bracket 20 is rotatably connected to the fastening base 10, a part of the blades 62 are connected to the fastening base 10, a part of the blades 62 are connected to the rotating bracket 20, and the plurality of blades 62 jointly enclose the aperture hole 101. The coil 32 is disposed on the rotating bracket 20, the magnetic piece 31 is disposed on the fastening base 10, the coil 32 is disposed facing the magnetic piece 31, and the coil 32 is configured to drive the rotating bracket 20 to rotate relative to the fastening base 10, to change the hole diameter of the aperture hole 101. It may be understood that, compared with a solution in which dynamic magnetic driving is used, that is, the coil 32 is disposed on the fastening base 10, the magnetic piece 31 is disposed on the rotating bracket 20, and the magnetic piece 31 drives the rotating bracket 20 to rotate, in this application, a moving coil driving manner is used, that is, the magnetic piece 31 is disposed on the fastening base 10, the coil 32 is disposed on the rotating bracket 20, and the coil 32 drives the rotating bracket 20 to rotate. This can avoid affecting adjustment of the variable aperture 100 as the magnetic piece 31 is affected by a magnet (for example, a magnet in a motor) in another component near the variable aperture 100.

In addition, both the drive chip 40 and the first electrical connector 51 are disposed on the fastening base 10, the second electrical connector 52 is disposed on the rotating bracket 20, the first electrical connector 51 is electrically connected to the second electrical connector 52, and the coil 32 is electrically connected to the power supply interface 433 of the drive chip 40 through the second electrical connector 52 and the first electrical connector 51. It may be understood that, compared with the solution in which the drive chip 40 is fastened to the rotating bracket 20, in this application, the drive chip 40 is fastened to the fastening base when the variable aperture 100 adopts a moving coil driving manner, and the coil 32 is electrically connected to the power supply interface of the drive chip 40 through the second electrical connector 52 and the first electrical connector 51, so that a circuit for connecting the data interface 432 of the drive chip 40 from the rotating bracket 20 to the fastening base 10 may be not needed, and a connection structure in the electrical connection assembly 50 can be simplified. Resistance on the rotating bracket 20 during rotation is small, which helps reduce power consumption of the variable aperture 100.

The foregoing specifically describes a specific implementation of the variable aperture 100 with reference to related accompanying drawings. The following further describes several implementations of the variable aperture 100 with reference to related accompanying drawings.

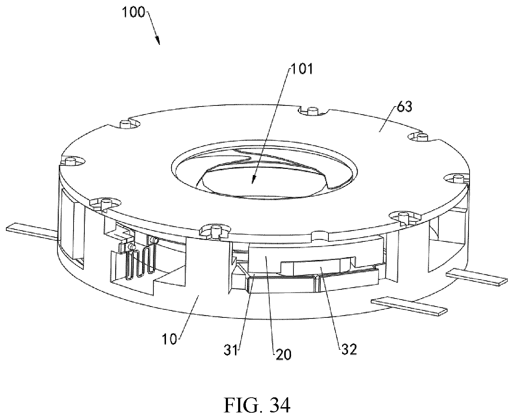

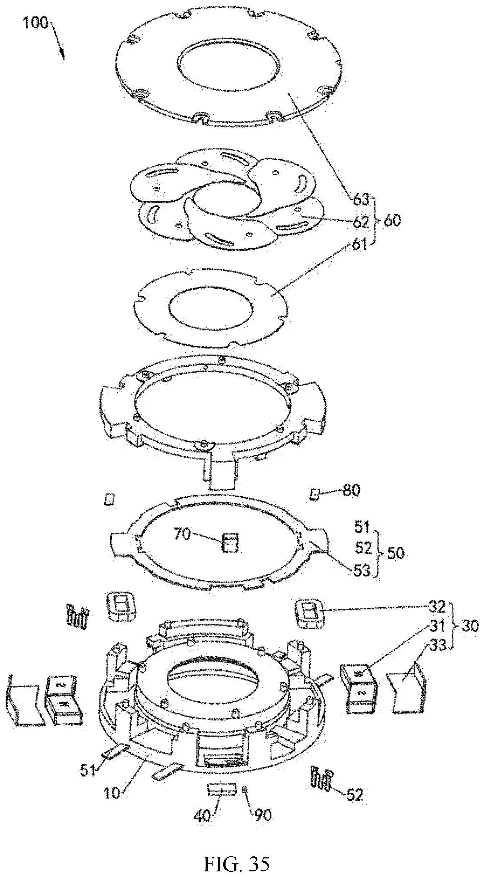

In some implementations, technical content that is the same as that in the foregoing implementations is not described again. FIG. 34 is a diagram of a structure of the variable aperture 100 shown in FIG. 4 according to another implementation. FIG. 35 is a schematic exploded view of a part of the variable aperture 100 shown in FIG. 34 according to an implementation.

As shown in FIG. 34 and FIG. 35, the variable aperture 100 may include the fastening base 10, the rotating bracket 20, the drive assembly 30, the drive chip 40, the electrical connection assembly 50, the blade assembly 60, the Hall magnetic piece 70, and the magnetic suction sheet 80. For example, the drive assembly 30 may include a magnetic piece 31, a coil 32, and a magnetic conductive piece 33. The electrical connection assembly 50 may include a first electrical connector 51, a second electrical connector 52, and a third electrical connector 53. The blade assembly 60 may include a gasket 61, a plurality of blades 62, and an upper cover 63.

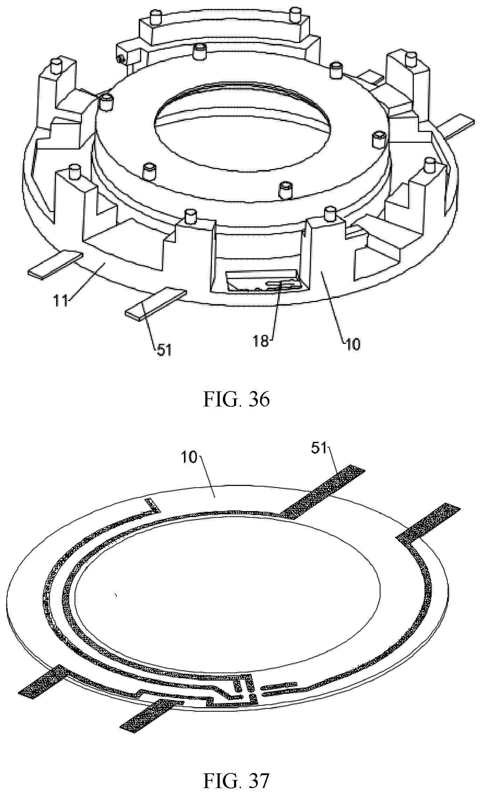

FIG. 36 is a diagram of assembling the first electrical connector 51 and the fastening base 10 shown in FIG. 35 according to an implementation. FIG. 37 is a sectional view of the fastening base 10 shown in FIG. 36 according to an implementation.

As shown in FIG. 36 and FIG. 37, the first electrical connector 51 may be a metal terminal. The first electrical connector 51 may be embedded into the fastening base 10. A part of the first electrical connector 51 may be exposed on a side surface of the bottom wall 11 of the fastening base 10, and a part of the first electrical connector 51 may be exposed through the first through hole 18.

The first electrical connector 51 of the electrical connection assembly 50 and the fastening base 10 may be formed into an integrated mechanical part through an insert molding process. The insert molding (insert molding) process refers to a molding process in which a pre-prepared insert is inserted into a mold and then a melted material is injected, and the melted material and the insert are jointed and solidified to form an integrated product.

It may be understood that, the first electrical connector 51 of the electrical connection assembly 50 and the fastening base 10 are formed into an integrated mechanical part through the insert molding process, so that a quantity of assembling parts of the variable aperture 100 can be reduced, assembling steps can be reduced, and assembling difficulty can be reduced. In addition, the fastening base 10 may further protect the first electrical connector 51 of the electrical connection assembly 50, to reduce a risk of damage to the first electrical connector 51 of the electrical connection assembly 50. The electrical connection assembly 50 of the variable aperture 100 has good reliability.

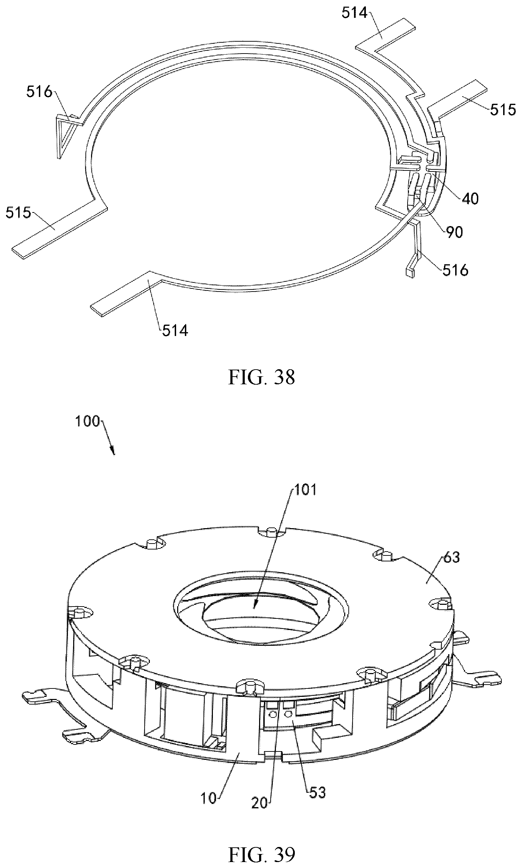

FIG. 38 is a diagram of assembling the first electrical connector 51, the drive chip 40, and the filter 90 shown in FIG. 35 according to an implementation.

As shown in FIG. 38, the first electrical connector 51 of the electrical connection assembly 50 may include a first trace 514, a second trace 515, and a third trace 516 that are spaced from each other. For example, there may be two first traces 514. There may be two second traces 515. There may be two third traces 516.

In some implementations, one end of the first trace 514 may be electrically connected to the power interface 431 (as shown in FIG. 12) of the drive chip 40, and the other end of the first trace 514 may be connected to an external circuit of the variable aperture 100.

In some implementations, one end of the second trace 515 may be electrically connected to the data interface 432 (as shown in FIG. 12) of the drive chip 40, and the other end of the second trace 515 may be connected to an external circuit of the variable aperture 100.

In some implementations, one end of the third trace 516 may be electrically connected to the power supply interface 433 (as shown in FIG. 12) of the drive chip 40, and the other end of the third trace 516 may be connected to the third electrical connector 53. In some implementations, the first electrical connector 51 of the electrical connection assembly 50 may be made of metal. When the third electrical connector 53 is a spring plate, the spring plate may be electrically conducted with the third trace 516 of the first electrical connector 51 through welding.

In some implementations, the variable aperture 100 may further include the filter 90. The two first traces 514 may be electrically connected to two power supply interfaces 433 of the drive chip 40 and the filter 90. In this way, the filter 90 may be connected in parallel to the drive chip 40 through the first trace 514. The filter 90 may be configured to filter a current transmitted to the drive chip 40, so as to prevent the drive chip 40 from being interfered by a radio frequency signal.

In some implementations, the drive chip 40 and the filter 90 may be connected to the first electrical connector 51 through welding, or the like.

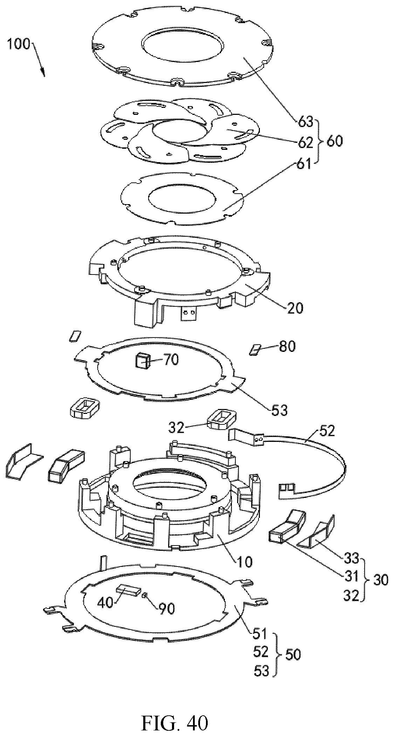

In some implementations, technical content that is the same as that in the foregoing implementations is not described again. FIG. 39 is a diagram of a structure of the variable aperture 100 shown in FIG. 4 according to another implementation. FIG. 40 is a schematic exploded view of a part of the variable aperture 100 shown in FIG. 39 according to an implementation.

As shown in FIG. 39 and FIG. 40, the variable aperture 100 may include the fastening base 10, the rotating bracket 20, the drive assembly 30, the drive chip 40, the electrical connection assembly 50, the blade assembly 60, the Hall magnetic piece 70, the magnetic suction sheet 80, and the filter 90. For example, the drive assembly 30 may include a magnetic piece 31, a coil 32, and a magnetic conductive piece 33. The electrical connection assembly 50 may include a first electrical connector 51, a second electrical connector 52, and a third electrical connector 53. The blade assembly 60 may include a gasket 61, a plurality of blades 62, and an upper cover 63.

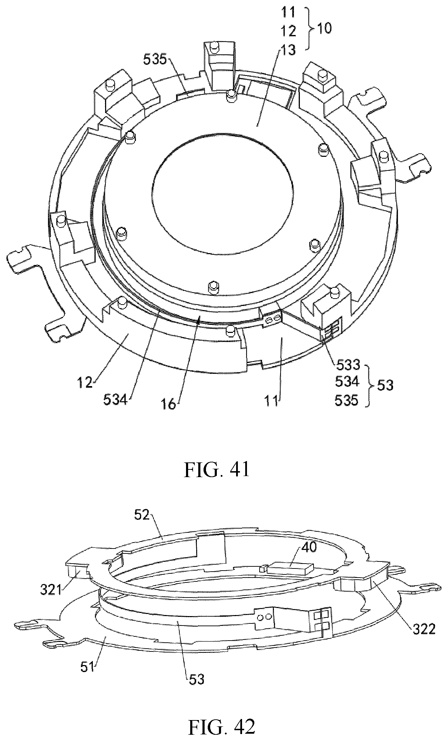

FIG. 41 is a diagram of assembling the third electrical connector 53 and the fastening base 10 shown in FIG. 40 according to an implementation. FIG. 42 is a diagram of assembling the electrical connection assembly 50, the coil 32, the drive chip 40, and the filter 90 shown in FIG. 40 according to an implementation.

As shown in FIG. 39, FIG. 41, and FIG. 42, the third electrical connector 53 may be a flexible circuit board. The third electrical connector 53 may include a first end part 533, a connection part 534, and a second end part 535. The connection part 534 is connected between the first end part 533 and the second end part 535. The first end part 533 of the third electrical connector 53 is fastened to the fastening base 10 and is electrically connected to the first electrical connector 51, the connection part 534 is located in the rotating channel 16, and the second end part 535 may be fastened to the rotating bracket and is electrically connected to the second electrical connector 52. In this way, the second electrical connector 52 may be electrically connected to the first electrical connector 51 through the flexible circuit board.

In some implementations, the side wall 12, the protruding part 13, and the bottom wall 11 of the fastening base 10 may enclose the rotating channel 16. The rotating bracket 20 may rotate in the rotating channel 16, and the flexible circuit board may be partially located in the rotating channel 16 and surround at least a part of the protruding part 13.

In some implementations, the connection part 534 may include a redundant length. For example, a length of the connection part 534 of the third electrical connector 53 may be greater than a length of the rotating channel 16 through which the connection part 534 passes.

It may be understood that the third electrical connector 53 may be a flexible circuit board, and the third electrical connector 53 has a long redundant length, so that a reaction force of the rotating bracket 20 of the variable aperture 100 in a rotation process can be greatly reduced, and power consumption is further reduced. In addition, the flexible circuit board has specific flexibility, and a good anti-impact capability, so that reliability of an electrical connection between the first electrical connector 51 and the second electrical connector 52 is good.

In some implementations, the third electrical connector 53 may be fastened to the fastening base 10 through hot riveting or adhesive.

In some implementations, the third electrical connector 53 may be fastened to the rotating bracket 20 through hot riveting or adhesive.

As shown in FIG. 41, the first end part 533 and the second end part 535 of the third electrical connector 53 may be located on two sides of the protruding part 13 of the fastening base 10.

In another implementation, the first end part 533 and the second end part 535 of the third electrical connector 53 may be adjacent to each other.

In another implementation, the third electrical connector 53 may alternatively be disposed around the entire protruding part 13. That is, the third electrical connector 53 may be a flexible circuit board in an entire circle.

It may be understood that, a position on which the first end part 533 is connected to the fastening base 10 and a position on which the second end part 535 is connected to the rotating bracket 20 may be set by a person skilled in the art based on an actual situation.

As shown in FIG. 42, the third electrical connector 53 may include a first trace and a second trace (not shown in the figure). The first trace and the second trace may be configured to implement electrical conduction between the first electrical connector 51 and the second electrical connector 52. For example, a flow path of a working current output by the drive chip 40 to the coil 32 may be: drive chip 40-first electrical connector 51-first trace-second electrical connector 52-first sub-coil 321-second sub-coil 322-second electrical connector 52-second trace-first electrical connector 51-drive chip 40.

It may be understood that, compared with a solution in which the drive chip 40 is fastened to the rotating bracket 20 and then electrically connected to an external circuit of the variable aperture 100 through the flexible circuit board, in a case in which the drive chip 40 is fastened to the fastening base, a quantity of traces in the flexible circuit board can be reduced, and complexity of circuit connection in the flexible circuit board can be reduced. A quantity of traces of the third electrical connector 53 is reduced, the third electrical connector 53 is more flexible, so that the rotating bracket 20 is subject to less resistance in a rotation process. When the rotating bracket 20 rotates at a same rotation angle, a working current required by the coil 32 is smaller, and power consumption of the variable aperture 100 is lower.

In some implementations, the variable aperture 100 may also omit the third electrical connector 53, and the second electrical connector 52 may be a flexible circuit board of a specific shape, and is fastened to the rotating bracket 20 and the fastening base 10 through bending and folding, to implement electrical conduction with the first electrical connector 51.

The foregoing specifically describes structures of several variable apertures 100 with reference to related accompanying drawings. The variable aperture 100 provided in this application includes the fastening base 10, the rotating bracket 20, the coil 32, the magnetic piece 31, the drive chip 40, the first electrical connector 51, the second electrical connector 52, and the plurality of blades 62. The rotating bracket 20 is rotatably connected to the fastening base 10, a part of the blades 62 are connected to the fastening base 10, a part of the blades 62 are connected to the rotating bracket 20, and the plurality of blades 62 jointly enclose the aperture hole 101. The coil 32 is disposed on the rotating bracket 20, the magnetic piece 31 is disposed on the fastening base 10, the coil 32 is disposed facing the magnetic piece 31, and the coil 32 is configured to drive the rotating bracket 20 to rotate relative to the fastening base 10, to change the hole diameter of the aperture hole 101. It may be understood that, compared with a solution in which dynamic magnetic driving is used, that is, the coil 32 is disposed on the fastening base 10, the magnetic piece 31 is disposed on the rotating bracket 20, and the magnetic piece 31 drives the rotating bracket 20 to rotate, in this application, a moving coil driving manner is used, that is, the magnetic piece 31 is disposed on the fastening base 10, the coil 32 is disposed on the rotating bracket 20, and the coil 32 drives the rotating bracket 20 to rotate. This can avoid affecting adjustment of the variable aperture 100 as the magnetic piece 31 is affected by a magnet (for example, a magnet in a motor) in another component near the variable aperture 100.

In addition, both the drive chip 40 and the first electrical connector 51 are disposed on the fastening base 10, the second electrical connector 52 is disposed on the rotating bracket 20, the first electrical connector 51 is electrically connected to the second electrical connector 52, and the coil 32 is electrically connected to the power supply interface 433 of the drive chip 40 through the second electrical connector 52 and the first electrical connector 51. It may be understood that, compared with the solution in which the drive chip 40 is fastened to the rotating bracket 20, in this application, the drive chip 40 is fastened to the fastening base when the variable aperture 100 adopts a moving coil driving manner, and the coil 32 is electrically connected to the power supply interface of the drive chip 40 through the second electrical connector 52 and the first electrical connector 51, so that a circuit for connecting the data interface 432 of the drive chip 40 from the rotating bracket 20 to the fastening base 10 may be not needed, and a connection structure in the electrical connection assembly 50 can be simplified. Resistance on the rotating bracket 20 during rotation is small, which helps reduce power consumption of the variable aperture 100.

It should be noted that different embodiments in this application and features in embodiments may be combined with each other without a conflict, and any combination of features in different embodiments also falls within the protection scope of this application. In other words, the foregoing described plurality of embodiments may further be combined according to an actual requirement.

It should be noted that all the foregoing accompanying drawings are example diagrams of this application, and do not represent an actual size of a product. In addition, a size proportion relationship between components in the accompanying drawings is not intended to limit an actual product in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A variable aperture (100), comprising a fastening base (10), a rotating bracket (20), a coil (32), a magnetic piece (31), a drive chip (40), a first electrical connector (51), a second electrical connector (52), and a plurality of blades (62), wherein
the rotating bracket (20) is rotatably connected to the fastening base (10), a part of the blades (62) are connected to the fastening base (10), a part of the blades (62) are connected to the rotating bracket (20), and the plurality of blades (62) jointly enclose an aperture hole (101);
the coil (32) is disposed on the rotating bracket (20), the magnetic piece (31) is disposed on the fastening base (10), the coil (32) is disposed facing the magnetic piece (31), and the coil (32) is configured to drive the rotating bracket (20) to rotate relative to the fastening base (10), to change a hole diameter of the aperture hole (101); and
both the drive chip (40) and the first electrical connector (51) are disposed on the fastening base (10), the second electrical connector (52) is disposed on the rotating bracket (20), the first electrical connector (51) is electrically connected to the second electrical connector (52), and the coil (32) is electrically connected to a power supply interface (433) of the drive chip (40) through the second electrical connector (52) and the first electrical connector (51).

2. The variable aperture (100) according to claim 1, wherein the variable aperture (100) comprises a first spring plate (531), and an output end of the second electrical connector (52) is electrically connected to an input end of the first electrical connector (51) through the first spring plate (531).

3. The variable aperture (100) according to claim 2, wherein one part of the first spring plate (531) is fastened to the fastening base (10), and the other part of the first spring plate (531) is fastened to the rotating bracket (20).

4. The variable aperture (100) according to claim 2 or 3, wherein the first spring plate (531) comprises a first end (5311), a deformation section (5312), and a second end (5313), the deformation section (5312) is connected between the first end (5311) and the second end (5313), the first end (5311) is fastened to the fastening base (10), and the second end (5313) is fastened to the rotating bracket (20); and
the deformation section (5312) is in a continuous "S" type.

5. The variable aperture (100) according to claim 4, wherein the first end (5311) is provided with a first fastening hole (5314), the second end (5313) is provided with a second fastening hole (5315), the fastening base (10) is provided with a first connection post (191), and the rotating bracket (20) is provided with a second connection post (291); and
the first fastening hole (5314) is sleeved on the first connection post (191), and the second fastening hole (5315) is sleeved on the second connection post (291).

6. The variable aperture (100) according to any one of claims 2 to 5, wherein a stiffness coefficient of the first spring plate (531) is less than or equal to 1.6 mN/mm.

7. The variable aperture (100) according to claim 1, wherein the second electrical connector (52) is electrically connected to the first electrical connector (51) through a flexible circuit board.

8. The variable aperture (100) according to claim 7, wherein the fastening base (10) comprises a bottom wall (11), a side wall (12), and a protruding part (13), the side wall (12) and the protruding part (13) are spaced from each other and are disposed on the bottom wall (11),
the bottom wall (11), the side wall (12), and the protruding part (13) are annular, and the side wall (12) surrounds the protruding part (13); and
the bottom wall (11), the side wall (12), and the protruding part (13) enclose the rotating channel (16), the rotating bracket (20) rotates in the rotating channel (16), and the flexible circuit board is partially located in the rotating channel (16) and surrounds at least a part of the protruding part (13).

9. The variable aperture (100) according to any one of claims 1 to 8, wherein the first electrical connector (51) is a metal terminal, and the first electrical connector (51) is embedded into the fastening base (10).

10. The variable aperture (100) according to any one of claims 1 to 8, wherein the first electrical connector (51) is a flexible circuit board, the first electrical connector (51) comprises a body part (511), a first connection end (512), and a second connection end (513), the first connection end (512) and the second connection end (513) are spaced from each other, are connected to the body part (511), and are electrically connected to the body part (511), and the body part (511) is connected to a side that is of the fastening base (10) and that is away from the rotating bracket (20); and
the drive chip (40) is connected to the body part (511), the coil (32) is electrically connected to the power supply interface (433) of the drive chip (40) through the second electrical connector (52), the first connection end (512), and the body part (511), and the drive chip (40) is electrically connected to an external circuit of the variable aperture (100) through the body part (511) and the second connection end (513).

11. The variable aperture (100) according to claim 10, wherein the first connection end (512) and the body part (511) are arranged in a thickness direction of the variable aperture (100), and the first connection end (512) is located on a side that is of the body part (511) and that is close to the rotating bracket (20).

12. The variable aperture (100) according to any one of claims 1 to 11, wherein the coil (32) is disposed facing the magnetic piece (31), and the coil (32) and the magnetic piece (31) are arranged in the thickness direction of the variable aperture (100).

13. The variable aperture (100) according to any one of claims 1 to 12, wherein the magnetic piece (31) comprises a south pole (317) and a north pole (318), and there is an included angle between a direction of the south pole (317) and a direction of the north pole (318).

14. The variable aperture (100) according to any one of claims 1 to 13, wherein the variable aperture (100) further comprises a magnetic conductive piece (33), and the magnetic conductive piece (33) is located on a side that is of the magnetic piece (31) and that is away from the coil (32).

15. The variable aperture (100) according to claim 14, wherein the magnetic piece (31) comprises a bottom surface (312) and an outer side surface (313), the bottom surface (312) is a side surface that is of the magnetic piece (31) and that is away from the coil (32), and the outer side surface (313) is a side surface that is of the magnetic piece (31) and that is away from a center of the fastening base (10); and
the magnetic conductive piece (33) is connected to the outer side surface (313) and the bottom surface (312) of the magnetic piece (31).

16. The variable aperture (100) according to any one of claims 1 to 15, wherein the coil (32) comprises a first sub-coil (321) and a second sub-coil (322) that are spaced from each other, the magnetic piece (31) comprises a first magnetic sub-piece (315) and a second magnetic sub-piece (316) that are spaced from each other, the first sub-coil (32) is disposed facing the first magnetic sub-piece (315), and the second sub-coil (32) is disposed facing the second magnetic sub-piece (316); and
the first sub-coil (321) and the second sub-coil (322) are configured to jointly drive the rotating bracket (20) to rotate relative to the fastening base (10), and the first sub-coil (321) and the second sub-coil (322) are symmetrical with respect to a rotation center of the rotating bracket (20).

17. The variable aperture (100) according to any one of claims 1 to 16, wherein the variable aperture (100) further comprises a Hall magnetic piece (70), the Hall magnetic piece (70) is connected to the rotating bracket (20), the Hall magnetic piece (70) is disposed facing the drive chip (40), and the drive chip (40) is further configured to detect magentic field strength of the Hall magnetic piece (70) at different positions.

18. The variable aperture (100) according to any one of claims 1 to 17, wherein the variable aperture (100) further comprises a magnetic suction sheet (80), the magnetic suction sheet (80) is connected to the rotating bracket (20), the magnetic suction sheet (80) cooperates with the magnetic piece (31) to drive the rotating bracket (20) to rotate relative to the fastening base (10), the hole diameter of the aperture hole (101) decreases; and
in the thickness direction of the variable aperture (100), a projection of a magnetic field center of the magnetic suction sheet (80) on the fastening base (10) is staggered with a projection of a magnetic field center of the magnetic piece (31) on the fastening base (10).

19. A camera module (1000), comprising a lens assembly (200) and the variable aperture (100) according to any one of claims 1 to 18, wherein the variable aperture (100) is fastened to the lens assembly (200) and is located on a light entry side of the lens assembly (200).

20. An electronic device (1), comprising a housing (2000) and the camera module (1000) according to claim 19, wherein the camera module (1000) is disposed in the housing (2000).
